# EUROPEAN PATENT APPLICATION

(11) **EP 4 575 839 A1**
(43) Date of publication of application: **25.06.2025**
(21) Application number: 23307340.2
(22) Date of filing: 22.12.2023
(51) Int. Cl.: G06F 16/906, G06N 3/00

(54) **DEVICE, SYSTEM, AND METHOD FOR IMPLEMENTING A COMPUTATIONALLY EFFICIENT NEURAL NETWORK**

(71) Applicant: Amadeus S.A.S., 06410 Biot (FR)
(72) Inventor: THOMAS, Eoin, 06600 Antibes (FR); AVRANAS, Apostolos, 06000 Nice (FR)
(74) Representative: Samson & Partner Patentanwälte mbB

(57) **Abstract**

A computing device generates a neural network (NN) comprising an architecture of a plurality of levels of respective groups of respective neurons, a last level of the NN split into groups corresponding to a respective number of a given set of NN classes, at least one child group of a given level of the NN being disconnected from other groups of the given level. The computing device associates the groups of the last level with a respective subset of the given set of NN classes. The computing device trains the NN using a training dataset, the training dataset comprising inputs and outputs corresponding to the given set of the NN classes.

## Description

### FIELD

The specification relates generally to neural networks, and specifically to a device, system and method for implementing a computationally efficient neural network.

### BACKGROUND

While neural networks are a powerful tool, neural networks can take a long time to train, which can be a waste of computational resources and, with the proliferation of neural networks needing such training, use of computational resources in training neural networks can lead to huge energy consumption.

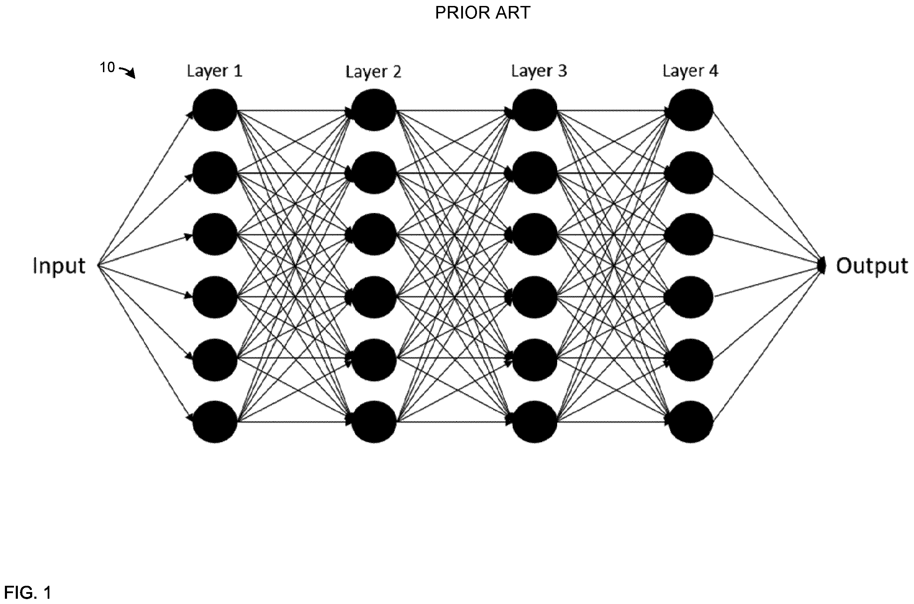

For example, attention is directed to FIG. 1, which depicts a neural network 10 of the prior art, with a "standard" architecture, comprising four layers of neurons (e.g. represented by circles), and each neuron in a layer is connected to all the neurons in a previous layer, and all the neurons in a next layer, with connections represented by arrows between the neurons. Such a large number of connections maximizes use of computational resources when training the neural network 10 and performing inference at testing time; indeed the training process may have long training times, and energy consumption is also generally maximized.

"Tree-CNN: A Hierarchical Deep Convolutional Neural Network for Incremental Learning" (Neural Networks 121 (2020): 148-160) proposes an adaptive hierarchical network structure composed of Deep Convolutional Neural Networks (DCNNs) that can grow and learn as new data becomes available, resulting in a network that grows to accommodate new classes of data, while preserving the ability to distinguish the previously trained classes. However, this approach is directed to incremental learning and for every new added set of classes, new nodes (e.g., groups) are added to new levels that are used to detect those new classes, which again can lead to computational bloat. Indeed, a final structure of such an architecture (i.e. how many levels, nodes and connections between nodes) is random and it is decided while training and depends on how sets of classes are incremented.

### SUMMARY

A first aspect of the present specification provides a method comprising: generating, via at least one computing device, a neural network (NN) comprising an architecture of a plurality of levels of respective groups of respective neurons, a last level of the NN split into groups corresponding to a respective number of a given set of NN classes, at least one child group of a given level of the NN being disconnected from other groups of the given level; associating, via the at least one computing device, the groups of the last level with a respective subset of the given set of NN classes; and training, via the at least one computing device, the NN using a training dataset, the training dataset comprising inputs and outputs corresponding to the given set of the NN classes.

At the method of the first aspect, when a total number of the respective groups of the given level is greater than two, then at least one child group of the given level may have a number of parent groups from a previous adjacent level that is less than a total number of the respective groups of the previous adjacent level, such that at least one child group is disconnected from at least one group of the previous adjacent level.

The method of the first aspect may further comprise: dividing intermediate levels of the NN, between a first level and the last level of the NN, into respective groups, at least two of the respective groups of a given intermediate level being disconnected from each other within the given intermediate level, and disconnected from at least one previous group of a previous adjacent level. In some of these example, every group in an intermediate level may be connected to only one group in the previous adjacent level and connected to one or more of the respective groups in a next adjacent level. In others of these examples, the respective groups of the intermediate levels and the respective groups of the last level may form a tree structure.

The method of the first aspect may further comprise: determining the given set of NN classes from semantic relationships between components of the training dataset.

The method of the first aspect may further comprise: generating an overall architecture of the NN, in terms of the plurality of the levels, the respective groups, and connections between the respective groups, based on semantic relationships between the NN classes.

The method of the first aspect may further comprise, after the training: for a given subset of the NN classes, selecting a portion of given groups from a first level of the NN to the last level of the NN that correspond to the given subset of the NN classes, and the given groups of the portion including intermediate groups that connect one or more of the groups of the last level of the NN that correspond to the given subset of the NN classes to the first level, and excluding other groups; and generating a new NN comprising the portion.

At the method of the first aspect, the respective neurons of all groups of the given level of the NN may be disconnected from respective neurons of the other groups of the given level of the NN.

At the method of the first aspect, the training dataset may comprise images, and the NN classes may comprise descriptions of the images.

At the method of the first aspect, the training dataset may comprise words, and the NN classes may represent one or more of: tasks; topic classification; sentiment analysis; and entity recognition.

A second aspect of the specification provides a computing device comprising: at least one controller; and a computer-readable storage medium having stored thereon program instructions that, when executed by the at least one controller, causes the at least one controller to perform a set of operations comprising: generating a neural network (NN) comprising an architecture of a plurality of levels of respective groups of respective neurons, a last level of the NN split into groups corresponding to a respective number of a given set of NN classes, at least one child group of a given level of the NN being disconnected from other groups of the given level; associating the groups of the last level with a respective subset of the given set of NN classes; and training the NN using a training dataset, the training dataset comprising inputs and outputs corresponding to the given set of the NN classes.

At the computing device of the second aspect, when a total number of the respective groups of the given level is greater than two, then at least one child group of the given level may have a number of parent groups from a previous adjacent level that is less than a total number of the respective groups of the previous adjacent level, such that at least one child group is disconnected from at least one group of the previous adjacent level.

At the computing device of the second aspect, the set of operations may further comprise: dividing intermediate levels of the NN, between a first level and the last level of the NN, into respective groups, at least two of the respective groups of a given intermediate level being disconnected from each other within the given intermediate level, and disconnected from at least one previous group of a previous adjacent level. In some of these examples, every group in an intermediate level may be connected to only one group in the previous adjacent level and connected to one or more of the respective groups in a next adjacent level. In others of these examples, the respective groups of the intermediate levels and the respective groups of the last level may form a tree structure.

At the computing device of the second aspect, the set of operations may further comprise: determining the given set of NN classes from semantic relationships between components of the training dataset.

At the computing device of the second aspect, the set of operations may further comprise: generating an overall architecture of the NN, in terms of the plurality of the levels, the respective groups, and connections between the respective groups, based on semantic relationships between the NN classes.

At the computing device of the second aspect, the set of operations may further comprise, after the training: for a given subset of the NN classes, selecting a portion of given groups from a first level of the NN to the last level of the NN that correspond to the given subset of the NN classes, and the given groups of the portion including intermediate groups that connect one or more of the groups of the last level of the NN that correspond to the given subset of the NN classes to the first level, and excluding other groups; and generating a new NN comprising the portion.

At the computing device of the second aspect, one or more of: the respective neurons of all groups of the given level of the NN may be disconnected from respective neurons of the other groups of the given level of the NN; the training dataset may comprise images, and the NN classes may comprise descriptions of the images; and the training dataset may comprise words, and the NN classes may represent one or more of: tasks; topic classification; sentiment analysis; and entity recognition.

At the computing device of the second aspect, the respective neurons of all groups of the given level of the NN may be disconnected from respective neurons of the other groups of the given level of the NN

At the computing device of the second aspect, the training dataset may comprise images, and the NN classes may comprise descriptions of the images; and the training dataset may comprise words.

At the computing device of the second aspect, the NN classes may represent one or more of: tasks; topic classification; sentiment analysis; and entity recognition.

A third aspect of the present specification provides a non-transitory computer-readable storage medium having stored thereon program instructions that, when executed by at least one computing device, causes the at least one computing device to perform a method comprising: generating a neural network (NN) comprising an architecture of a plurality of levels of respective groups of respective neurons, a last level of the NN split into groups corresponding to a respective number of a given set of NN classes, at least one child group of a given level of the NN being disconnected from other groups of the given level; associating the groups of the last level with a respective subset of the given set of NN classes; and training the NN using a training dataset, the training dataset comprising inputs and outputs corresponding to the given set of the NN classes.

At the method of the third aspect, when a total number of the respective groups of the given level is greater than two, then at least one child group of the given level may have a number of parent groups from a previous adjacent level that is less than a total number of the respective groups of the previous adjacent level, such that at least one child group is disconnected from at least one group of the previous adjacent level.

The method of the third aspect may further comprise: dividing intermediate levels of the NN, between a first level and the last level of the NN, into respective groups, at least two of the respective groups of a given intermediate level being disconnected from each other within the given intermediate level, and disconnected from at least one previous group of a previous adjacent level. In some of these example, every group in an intermediate level may be connected to only one group in the previous adjacent level and connected to one or more of the respective groups in a next adjacent level. In others of these examples, the respective groups of the intermediate levels and the respective groups of the last level may form a tree structure.

The method of the third aspect may further comprise: determining the given set of NN classes from semantic relationships between components of the training dataset.

The method of the third aspect may further comprise: generating an overall architecture of the NN, in terms of the plurality of the levels, the respective groups, and connections between the respective groups, based on semantic relationships between the NN classes.

The method of the third aspect may further comprise, after the training: for a given subset of the NN classes, selecting a portion of given groups from a first level of the NN to the last level of the NN that correspond to the given subset of the NN classes, and the given groups of the portion including intermediate groups that connect one or more of the groups of the last level of the NN that correspond to the given subset of the NN classes to the first level, and excluding other groups; and generating a new NN comprising the portion.

At the method of the third aspect, the respective neurons of all groups of the given level of the NN may be disconnected from respective neurons of the other groups of the given level of the NN.

At the method of the third aspect, the training dataset may comprise images, and the NN classes may comprise descriptions of the images.

At the method of the third aspect, the training dataset may comprise words, and the NN classes may represent one or more of: tasks; topic classification; sentiment analysis; and entity recognition.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a neural network according to the prior art, according to non-limiting examples.
FIG. 2 depicts a computationally efficient neural network, according to non-limiting examples.
FIG. 3 depicts another computationally efficient neural, according to non-limiting examples.
FIG. 4 depicts a computing device for implementing a computationally efficient neural network, according to non-limiting examples.
FIG. 5 depicts a method for implementing a computationally efficient neural network, according to non-limiting examples.
FIG. 6 depicts the computing device of FIG. 4 implementing a method for implementing a computationally efficient neural network, according to non-limiting examples.
FIG. 7 depicts the computing device of FIG. 4 continuuing to implement a method for implementing a computationally efficient neural network, according to non-limiting examples.
FIG. 8 depicts the computing device of FIG. 4 continuuing to implement a method for implementing a computationally efficient neural network, according to non-limiting examples.
FIG. 9 depicts the computing device of FIG. 4 continuuing to implement a method for implementing a computationally efficient neural network, according to non-limiting examples.
FIG. 10 depicts the computing device of FIG. 4 continuuing to implement a method for implementing a computationally efficient neural network, according to non-limiting examples.
FIG. 11 depicts the computing device of FIG. 4 implementing a method for implementing a computationally efficient neural network, according to non-limiting examples.
FIG. 12 depicts the computing device of FIG. 4 implementing a method for implementing a computationally efficient neural network, according to non-limiting examples.
FIG. 13 depicts the computing device of FIG. 4 implementing a neural network generated using the method of FIG. 5, according to non-limiting examples.
FIG. 14 depicts the computing device of FIG. 4 selecting a portion of a neural network generated using the method of FIG. 5, to generate a new neural network, according to non-limiting examples.
FIG. 15 depicts the computing device of FIG. 4 implementing a neural network generated using the method of FIG. 5 with an image that includes data that the neural network is not trained to identify, according to non-limiting examples.
FIG. 16 depicts the computing device of FIG. 4 adapting a neural network generated using the method of FIG. 5 for new neural network classes, according to non-limiting examples.
FIG. 17 depicts another neural network generated according to the method of FIG. 5, according to non-limiting examples.

### DETAILED DESCRIPTION

In general, a neural network (NN) (for example transformers, convolutional neural networks (CNNs), recurrent neural networks (RNNs), and the like) is composed of many sequential layers of neurons which may also be referred to as nodes or computational units. However, as each neuron in a layer is connected to all the neurons in a previous layer, and all the neurons in a next layer, a large number of connections result, maximizing use of computational resources both when training the neural network 10 and performing inference at testing time, maximizing energy consumption.

In a standard NN architecture (e.g., see FIG. 1), each neuron in a layer (other than a first layer) receives, as input, output of a neuron of a previous adjacent layer. Then each layer of neurons performs some transformation/processing of the inputs, and outputs data that is provided as input to all the neurons of a next adjacent layer (or a last layer provides output from the NN). The first layer of such an NN receives, as input, data representing a problem to be solved by the NN. A final and/or last NN layer produces output that is (e.g., ideally) a desirable output, such as a description and/or a textual description and/or a classification of an image received as input, or a next word or next words or a next sentence, of a sentence received as input. While hereafter NNs that classify or describe images input to an NN are used as an example (e.g., transformers, CNNs, RNNs, and the like), it is understood that such techniques provided herein may also be used for large language model (LLM) NNs to predict a word or words or a sentence or sentences that follow a word or words or a sentence or sentences input to an LLM NN.

As such, provided herein are computationally efficient neural networks, where neurons are arranged into groups, and the groups are arranged into a plurality of levels (e.g. which are different from the layers of the neural networks) of respective groups of neurons. A last level of a neural network as provided herein is split into groups of neurons corresponding to a respective number of a given set of neural network classes, and at least one child group of a given level is disconnected from other groups of the given level, such that, for the given level, respective neurons from at least two groups are disconnected (though neurons of a given group are understood to be connected in any suitable manner withing the given group).

Furthermore, semantic relationships between the neural network classes may be used to define the respective numbers of levels and groups, including the groups of the last level. As respective neurons of at least two groups in a given level are disconnected, the overall number of connections are reduced in neural networks as provided herein, at least as compared to the prior art, which reduces use of computational resources both when training the neural networks and when performing inference using the neural networks. Indeed, reducing the overall number of connections reduces time for the training process, and reduces energy consumption, least as compared to the prior art.

Hereafter, the term group will be used interchangeably with the term "group of neurons", where the group of neurons can span across multiple layers of a neural network and multiple neurons per layer.

In contrast to the term layer, the term "level" is used herein to refer a structure of the groups relative to each other, such that a group in a given level may be connected to a group in a previous adjacent level, and the group in the given level may be connected to a group in a next adjacent level. However, a level may include layers of neurons.

Furthermore, it is understood that the terms "connect" and/or "connection" when referring to groups being connected, is used herein to refer to neurons in groups of adjacent levels being connected, and/or is used herein to refer to neurons within a group being connected, and/or is used herein to refer to neurons in groups of a same level being connected.

Conversely, it is understood that the terms "disconnect" and/or "disconnected" when referring to groups being disconnected, is used herein to refer to neurons in groups of adjacent levels being disconnected, and/or is used herein to refer to neurons in groups of a same level being disconnected.

Furthermore, it is understood that the terms "parent group" and "child group" are used herein to refer to groups of adjacent levels that are connected, with a parent group of a given level being connected to child group of a next adjacent level, and a child group being connected to a parent group of a previous adjacent level. Indeed, a given group of a given level may be a parent group to one or more child groups of a next adjacent level, and the same given group of the given level may be a child group of one or more parent groups of a previous adjacent level.

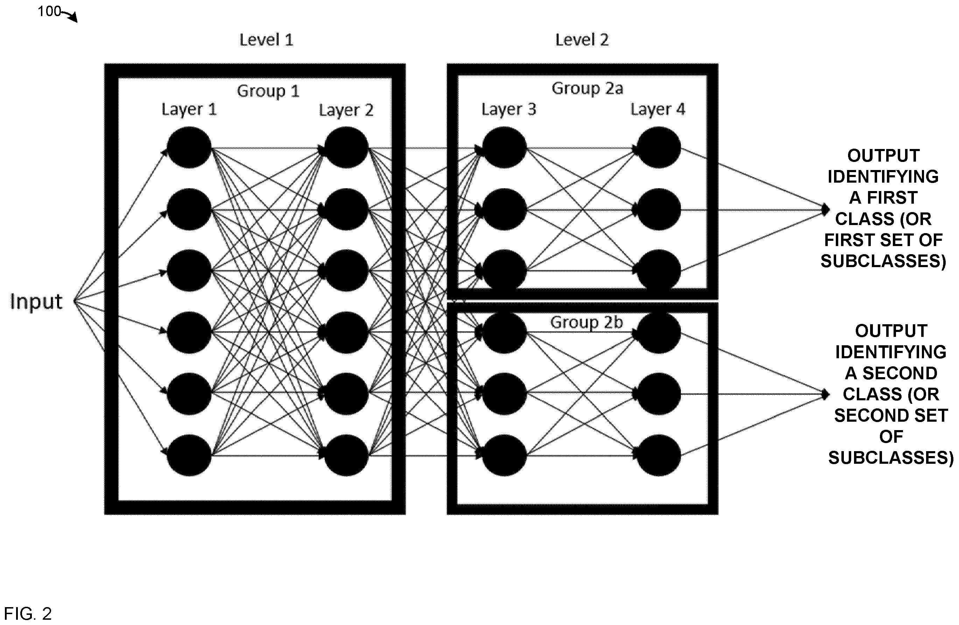

Furthermore, it is understood that the term "first level" is used herein to refer to a level of the NNs provided herein that receives input. Similarly, it is understood that the term "last level" is used herein to refer to a level of the NNs provided herein that outputs results. In some examples, an NN may include only a first level and a last level (e.g. two levels, for example see FIG. 2).

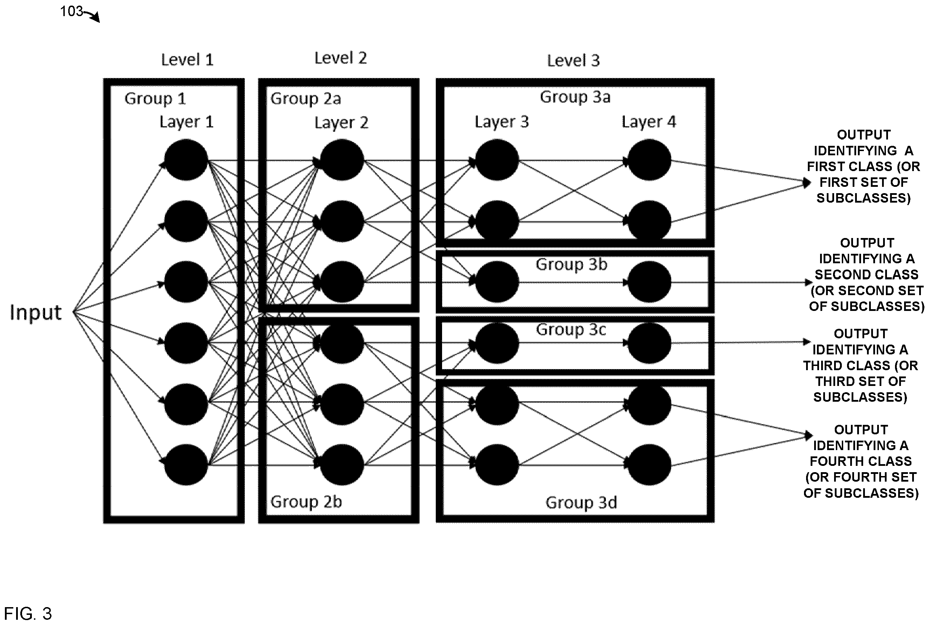

Similarly, it is understood that the term "intermediate level" is used herein to refer to a level of the NNs provided herein between the first level and the last level. In some examples, an NN may include a first level, at least one intermediate level, and a last level (e.g. at least three levels, for example see FIG. 3).

As described herein, an architecture of an NN (e.g., an NN model) may be specified. For example, a number of levels of an NN may be specified, and a number of groups for each level may be specified. Furthermore, connections between the groups of adjacent levels may also be specified, and connections between the groups of a same level may also be specified.

As such, an NN (e.g., and/or an NN architecture) provided herein comprises an NN with a fixed number of levels that includes a last level of the NN split into groups corresponding to a respective number of a given set of NN classes, and which may be provided in tandem with a training dataset comprising inputs and outputs corresponding to the NN classes.

In particular, each level of the NN is divided into groups of respective neurons (which may span multiple layers), where each group of a level may make an at least partially independent transformation of input to a group. In particular such independent transformation occurs by removing at least a portion of connections with groups of previous adjacent levels when specifying these groups, and/or by specifying that groups are to be disconnected from groups of previous adjacent levels. In addition, when a given group of a given level is disconnected from groups of a previous adjacent level, such a given group is also disconnected from other groups in the given level that are connected to groups of the previous adjacent level from which the given group is disconnected. Hence, different groups of a same level may have no common parent groups (e.g. of a previous adjacent level) and/or no common child groups (e.g. of a next adjacent level), and hence the different groups make respective independent transformations of respective input. Put another way, different groups of a same level may be generally disconnected from each other and/or may be connected to only a subset of groups of a previous adjacent level, including, but not limited to, being connected to only one group of a previous adjacent level.

Hence, such disconnections between groups (both within a level and between levels) may result in computational and/or time saving and/or energy saving benefits. While disconnecting groups may degrade performance of an NN, with an appropriate clustering of NN classes into similar sets that corresponds to the NN classes of the last level of the NN, the performance of the NN may be improved by logical group creation, while maintaining the reduced computational benefits. This clustering may occur using a training dataset that is provided to train such an NN, with semantic clustering of inputs and outputs of the training dataset, and/or via logical group creation, and/or via data driven clustering.

For example, such a training dataset may comprise images of animals of different types (e.g., as all images are of animals, the images are understood to be semantically related), for example land animals and aquatic animals, with the images of the land animals limited to certain types of land animals (e.g., mammals and reptiles, which are understood to be semantically related by virtue of being land animals), and the images of the aquatic animals limited to certain types of aquatic animals (e.g., sharks, turtles (e.g. present examples assume refer to sea turtles as turtles)), and small fish, which are understood to be semantically related by virtue of being aquatic animals). In particular, in this example, there are five types of inputs and corresponding outputs of the training dataset, and the number of disconnected groups in a last level of an NN, as provided herein, may correspond to the number of inputs or the number of outputs (e.g., which are understood to be the same) of the training dataset. In this example, NN classes may hence comprise: mammals, reptiles, sharks, turtles and small fish.

Use of such a semantically related training dataset for training the NN, leads to a semantic clustering of NN classes. For example, when a particular group ""activates" for land animals (e.g., to classify an image of a land animal, input to the NN, as a mammal or a reptile) and another group "activates" for aquatic animals (e.g., to classify an image of an aquatic animal, input to the NN, as a shark or a turtle or a small fish), then having two such disconnected groups does not generally affect the overall performance of the NN.

Hence, as provided herein, a structure of levels and groups of an NN may be specified before training of the NN. In particular, training of an NN is a procedure during which neurons of groups are tuned in a way such that transformations performed by the groups of the neurons solve the problem with which the NN is to be tasked (e.g., receiving an image and classifying the image as a mammal (or type of mammal), reptile (or type of reptile), shark (or type of shark), turtle (or type of turtle) or small fish (or type of small fish)).

In particular, for an NN provided herein, a number of levels is specified, a number of groups of a given level is specified, and connections (and/or disconnections) between groups of adjacent levels, and/or connections (and/or disconnections) between groups of a given level are specified. Furthermore, knowledge of a semantic structure of a problem that the NN is to solve can be used to determine the architecture of the NN, for example as represented by a training dataset and/or by semantic clustering of classes of the training dataset.

Returning to the previous example, assuming an NN is to be generated (e.g., to classify images of land and aquatic animals into a given number of specified classes, such as land animals, or more specifically, mammals or reptiles, and aquatic animals, or more specifically, sharks, turtles or small fish) a training dataset may be provided comprising labelled images of mammal, reptile, shark, turtle or small fish (e.g., respectively labelled as mammals, reptiles, sharks, turtles or small fish, or respective types thereof). In particular, such a training dataset may include three semantic levels, with different numbers of semantic clustering in each level: a semantic cluster of animals suggests one "animal" group for a first level, semantic clusters of land animals and aquatic animals (e.g., two subsets of animals) suggest two groups of a second level, and semantic clusters of mammals, reptiles (e.g., two subsets of land animals), and semantic clusters of sharks, turtles small fish (e.g., three subsets of aquatic animals) suggest five groups of a third level. Furthermore such semantic clustering indicates that the two groups of the second level should be connected to the first level (e.g., one for land animals and one for aquatic animals); such semantic clustering further indicates that the two groups of the third level associated with the two subsets of land animals should be connected to the group of the second level associated with land animals, and that the three groups of the third level associated with the three subsets of aquatic animals should be connected to the group of the second level associated with aquatic animals. Hence, the semantic clustering of a training dataset may be used to determine the architecture of the NN.

Hence one architecture/structure of such an NN that may be specified for such a training dataset includes three levels:
- A first level may comprise one group that receives images as input. After training the one group may identify animals in the image, such that, in output from the one group, animals are identified.
- A second level may comprise two groups that both receive output of the first level. After training, a first group of the second level may identify land animals in the output, and a second group of the second level may identify aquatic animals in the output received.
- A last level may comprise five groups (e.g. corresponding to the number of the NN classes):
   --Two of the groups of the last level receive output of the first (e.g., land animal) group of the second level, but not the output from the second (e.g., aquatic animal) group of the second level. Put another way, the two groups of the last level are disconnected from at least one group of the previous adjacent level. After training, a first group of the two groups (e.g. of the last level) may identify mammals in the output received, and a second group of the two groups of the last level may identify reptiles in the output received.
   --The remaining three groups of the last level receive output of the second (e.g., aquatic animal) group of the second level, but not the output from the first (e.g., land animal) group of the second level. Put another way, the remaining three groups of the last level are disconnected from at least one group of the previous adjacent level. After training, a first group of the remaining three groups of the last level may identify sharks in the output received, a second group of the remaining three groups of the last level may identify turtles in the output received, and a third group of the remaining three groups of the last level may identify small fish in the output received.

In general the output from the (e.g. five) groups of the last level comprise the output of the NN.

Returning to the "mammals, reptiles, sharks, turtles, small fish" training dataset example, during training, images of mammals may be designated as input to the NN, and a "mammal" label may be designated as output for one of the aforementioned two groups of the last level. Similarly, during training, images of reptiles may be designated as input to the NN, and a "reptile" label may be designated as output for the other of the aforementioned two groups of the last level. Similarly, during training, images of sharks may be designated as input to the NN, and a "shark" label may be designated as output for a first group of the aforementioned remaining three groups of the last level. Similarly, during training, images of turtles may be designated as input to the NN, and a "turtle" label may be designated as output for a second group of the aforementioned remaining three groups of the last level. Finally, during training, images of small fish may be designated as input to the NN, and a "small fish" label may be designated as output for a third group of the aforementioned remaining three groups of the last level.

However, it is understood that images that are labeled with respect to an NN class (e.g. mammals, reptiles, sharks, turtles, small fish) may be further labelled and/or alternatively labelled according to subclasses of the NN class, and the NN trained accordingly.

For example, images of mammals may be labelled according to a subclass of mammals, such as lions, tigers or dogs. Similarly, images of reptiles may be labelled according to a subclass of reptiles, such as snakes or lizards. Similarly, images of sharks may be labelled according to a subclass of sharks such as great white, hammerhead or reef. Similarly, images of turtles may be labelled according to a subclass of turtles, such as green, hawksbill, or leatherback. Similarly, images of small fish may be labelled according to a subclass of small fish, such as clownfish, angelfish and damselfish.

Then, during operation of the NN, an image input to the NN, which is understood to include a combination of one or more of mammals, reptiles, sharks, turtles, small fish, results in output of groups of the last level classifying the image according to one or more of mammals, reptiles, sharks, turtles, small fish, and/or according to a respective subclass thereof, depending on the labelling of the images used during the training.

More generally, a resulting structure of an NN as provided herein may comprise a tree structure, in which a child group is connected to only one parent group of a previous adjacent level, though a parent group may be connected to more than one child groups of a next adjacent level.

However, an NN as provided herein may deviate from such a strict adherence to a rigid tree structure. For example, a child group of a given level may include a plurality of parent groups of a previous adjacent level, but to achieve a reduction in computational resources, a number of parents groups to which the child group is connected is understood to be less than a total number of groups of the previous adjacent level, but may include one or more parent groups. However, it is understood that, to achieve yet a further reduction in computational resources, at least one child group in a given level of an NN as provided herein, may have only one parent group in a previous adjacent level, with the previous adjacent level otherwise having a plurality of groups (e.g., the one parent group and at least one other group). Indeed, the more child groups that meet these conditions, the more usage of computational resources is reduced (e.g., as is time for training the NN and the energy used to train the NN). However, such computational advantages may be further achieved by structuring the NN according to semantic relationships between the NN classes as defined by a training dataset used to train the NN

It is furthermore, generally understood that each of the groups of a last level of an NN as provided herein will generate some output, and each output may be generated with a respective score, for example on a scale of 0 to 100, with 0 indicating the lowest and/or worst possible accuracy of the output, and 100 indicating highest and/or best possible accuracy of the output, though any suitable scale is within the scope of the present specification (e.g., 0 to 1). For example, returning to an NN trained to identify images of mammals, reptiles, sharks, turtles, small fish, when an image of a mammal is input to the NN, the group of the last level that identifies mammals may output the term "mammal" (e.g. or lion or tiger or dog) with a score of 95, while the other groups of the last level may output respective terms "reptile", "shark", "turtle", "small fish" (or whichever subclass the other groups are trained to identify) but with scores between 0 and 10. As such it is understood that the NN has identified the input image as including a mammal.

Similarly, when an image of a mammal and a small fish is input to the NN, the group of the last level that identifies mammals may output the term "mammal" with a score of 8, and the group of the last level that identifies small fish may output the term "small fish" (e.g. or clownfish, angelfish or damselfish) with a score of 95, while the other groups of the last level may output respective terms "reptile", "shark", "turtle", but with scores between 0 and 5. As such it is understood that the NN has identified the input image as including a mammal and a small fish. As such, it is understood that that NNs provided herein may be used for multi-label classification/detection.

In some examples, once an NN is trained to identify a plurality of classes (e.g., mammals, reptiles, sharks, turtles, small fish), and later an NN is needed that identifies only a subset of those classes (e.g., mammals), a new NN may be generated that comprises a portion of given groups from a first level of the NN to one or more groups of the last level of the NN that correspond to the that subset of classes, the given groups including a group of the first level, and intermediate groups that connect the one or more groups of the last level of the NN, that correspond to that subset of classes, to the first level, and excluding the other groups. This new NN hence has reduced usage of computational resources as compared to the parent NN, as the new NN is trained to identify only a subset of classes as compared to the parent NN. The new NN may be understood to include a path, or a union of paths, through the parent NN that identifies only the specified subset of the classes.

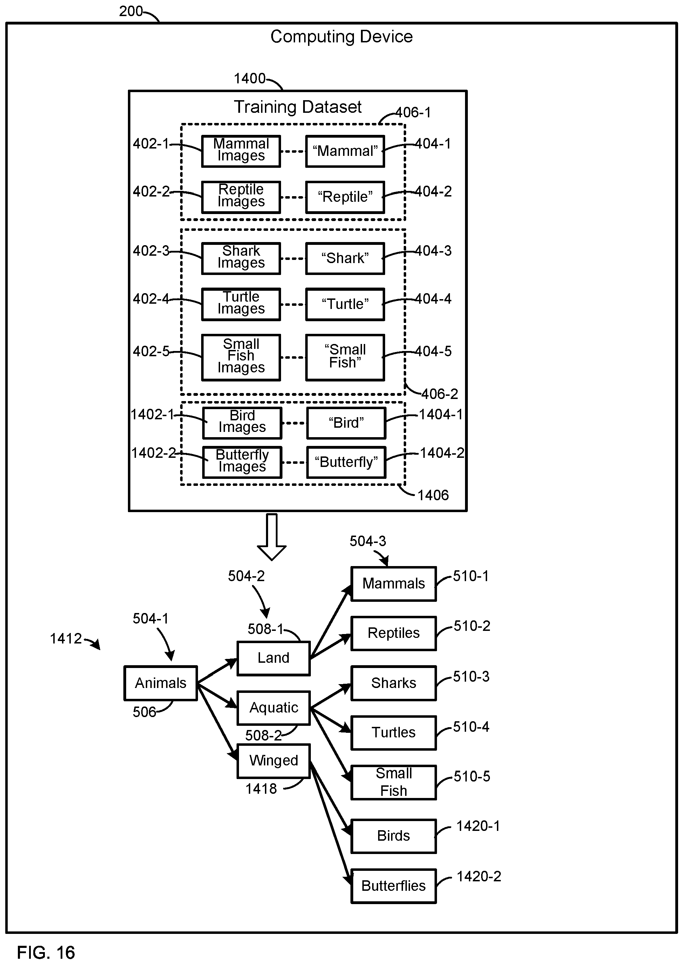

Furthermore, in some examples, when an image input to a trained NN, as provided herein, results in output that identifies the image with low accuracy (e.g., as indicated by a score of the output being below a threshold score, such as 40, 50, 60, amongst other possibilities, for example on the aforementioned scale of 0 to 100), such an image may not belong to one of the classes that the NN is trained to identify. Such a result may indicate that the structure of the NN should be regenerated to include a new group of the last level and possibly one or more new groups of an intermediate level. Returning to the mammals, reptiles, sharks, turtles, small fish example, when an image input to the trained NN includes a bird, none of the groups of the last level will generate an output with a score above the threshold score. As such, the NN may be restructured to include an additional group of the last level that is connected to the "land animal" group and images of birds, with a label of "bird" may be used to train the restructured NN such that the additional group of the last level identifies birds. In particular, labelled images of birds may be added to the original training dataset, which are understood to be semantically related to land animals, and the restructured NN may be retrained accordingly. Alternatively, the labelled images of birds may be added to the original training dataset, which are understood to be semantically related to animals, but may represent a new class of winged animals, and the restructured NN may be retrained accordingly; indeed, images of other types of winged animals, such as butterflies, may be added to the original training dataset, to train the restructured NN to identify both birds and butterflies, with a new group corresponding to "winged animals" added to the second level (e.g. see FIG. 16).

Such an example differs from the prior art as, while new groups may be added to a restructured NN, such new groups are not added according to random factors, but again according to a semantic structure of an updated training dataset and/or updated relationships between semantic classes. However, in some examples, retraining may occur only with the new images of birds (and/or butterflies) of the training dataset due to the disconnections between the other groups of the last level to the new group of the last level designated for identifying birds (and/or butterflies), and the like; hence such disconnections may further provide advantages in such retraining.

In some examples, each group of the NN may be activated only when input thereto is associated with the subset of classes that a group is responsible for identifying. For example, output from a group may be high or low, depending on whether input to a group is associated with the subset of classes that a group is responsible for identifying. Determination of whether output is high or low may occur using thresholds. Hence, using thresholds, child groups receiving input that are below a threshold may be configured to stop determining output for such input. Put another way, groups of an NN as provided herein that receive, as input, low values (below a threshold), do not "activate", whereas groups of an NN as provided herein that receive, as input, high values (above a threshold) "activate".

While heretofore, examples have been described with respect to NNs trained to identify images, similar examples may be applied to large language model (LMM) NNs. For example, for an LMM NN, input may compri se words that may form part of a sentence, and the LMM NN outputs a set of one or more words and/or one or more sentences predicted to be a "good" continuation of the input words. In such examples, an LMM NN may be structured as described herein so that different groups of at least a last level of the LMM NN "activate" (e.g., output predicted words with scores above a threshold score) for semantically different sets of one or more words.

Attention is next directed to FIG. 2, which depicts an NN 102 according to present examples. In particular, the NN 102 is based on the NN 10 of FIG. 1, and includes four layers of neurons, with six neurons in a layer. However, in contrast to the NN 10 of FIG. 1, a first two layers of the neurons have been grouped into a group "Group 1" of a first "Level 1", and the next two layers of neurons have been grouped into two groups "Group 2a" and "Group 2b" of a second "Level 2".

It is further understood that the NN 102 having only four layers of neurons, with six neurons per layer, is a simplified version of an NN. Indeed, the NN 102, as well as other NNs provided herein, may include hundreds to thousands of layers, or higher, with hundreds to thousands of neurons, or higher, in a layer.

Furthermore, it is understood that Group 1 is a parent group of Group 2a and Group 2b, and/or that Group 2a and Group 2b are both child groups of Group 1. Furthermore, as depicted, neurons of Group 2a and Group 2b are connected to the neurons of Group 1, but respective neurons of Group 2a and Group 2b are disconnected from each other. Hence, for example, Group 1 of Level 1 may receive any suitable "Input" (e.g. images, text, and the like), and the neurons of Group 1 may provide output to both Group 2a and Group 2b, but the neurons of Group 2a and Group 2b do not communicate with each other when determining respective output.

For example, the "Input" may comprise images of objects of a first semantic class or a second semantic class (e.g. one semantic class for each group of the last Level 2), and Group 2a may be trained to identify objects of the first semantic class whereas Group 2b may be trained to identify objects of the second semantic class. Hence, the neurons of the Group 2a and the Group 2b are disconnected for efficiency in respectively identifying objects of the first semantic class and the second semantic class.

Furthermore, output of the Group 2a is depicted identifying the first semantic class (e.g. or a first set of subclasses of the first semantic class), and output of the Group 2b is depicted as being for the second semantic class (e.g. or a second set of subclasses of the second semantic class).

Hence, the NN 102 comprises two levels and three groups. In this example, the connections between Group 2a and Group 2b are disconnected. The NN 102 hence includes 6 input connections (e.g. one to each neuron in Group 1), 6x6x2 interneuron connections within Group 1, 3x3x2 interneuron connections for Group 2a and Group 2b, and 6 output connections for a total of 102 connections. In contrast, the NN 10 includes 6 input connections (e.g. one to each neuron in Group 1), 6x6x3 interneuron connections between neurons of each layer, and 6 output connections for a total of 120 connections. As such the NN 102 may represents a 15% reduction in connections as compared to the NN 10, which may result in the NN 102 being up to 15% faster and/or more computationally efficient than the NN 10; regardless the NN 102 is generally faster and and/or more computationally efficient then the NN 10.

Attention is next directed to FIG. 3, which depicts an NN 103 according to present examples. In particular, like the NN 102, the NN 103 is based on the NN 10 of FIG. 1, and includes four layers of neurons. However, in contrast to the NN 10 of FIG. 1, a first layer of the neurons have been grouped into a group "Group 1" of a first "Level 1", a next layer of neurons have been grouped into two groups "Group 2a" and "Group 2b" of a second "Level 2", and the final two layers of neurons have been grouped into four groups "Group 3a", "Group 3b", "Group 3c"and "Group 2d" of a third "Level 3".

Furthermore, it is understood that Group 1 is a parent group of Group 2a and Group 2b, and/or that Group 2a and Group 2b are both child groups of Group 1. Similarly, it is understood that Group 2a is a parent group of Group 3a and Group 3b, and/or that Group 3a and Group 3b are both child groups of Group 2a. Similarly, it is understood that Group 2b is a parent group of Group 3c and Group 3d, and/or that Group 3c and Group 3d are both child groups of Group 2b.

Furthermore, as depicted, neurons of Group 2a and Group 2b are connected to the neurons of Group 1, but respective neurons of Group 2a and Group 2b are disconnected from each other. Hence, for example, Group 1 of Level 1 may receive any suitable "Input" (e.g. Images, Text, and the like), the neurons of Group 1 may provide output to both Group 2a and Group 2b, but the neurons of Group 2a and Group 2b do not communicate with each other when determining respective output. For example, the "Input" may comprise images of objects of four semantic classes, for example one for each of the four groups of the last Level 3.

Group 2a may be trained to identify objects of two of the four semantic classes, whereas Group 2b may be trained to identify objects of the other two of the four second semantic classes. Hence, the neurons of the Group 2a and the Group 2b are disconnected for efficiency in respectively identifying objects of the two different respective semantic classes of the four semantic classes.

Similarly, as depicted, neurons of Group 3a and Group 3b are connected to the neurons of Group 2a, but respective neurons of Group 3a and Group 3b are disconnected from each other (and from respective neurons of Group 3c and Group 3d). Group 3a may be trained to identify objects of one of the two semantic classes identified by Group 2a, whereas Group 3b may be trained to identify objects of the other of the two semantic classes identified by Group 2a. Hence, the neurons of the Group 3a and the Group 3b are disconnected for efficiency in respectively identifying objects of the two different respective semantic classes of the four semantic classes.

Similarly, as depicted, neurons of Group 3c and Group 3d are connected to the neurons of Group 2b, but respective neurons of Group 3c and Group 3d are disconnected from each other (and from respective neurons of Group 3a and Group 3b). Group 3c may be trained to identify objects of one of the two semantic classes identified by Group 2b, whereas Group 3d may be trained to identify objects of the other of the two semantic classes identified by Group 2b. Hence, the neurons of the Group 3c and the Group 3d are disconnected for efficiency in respectively identifying objects of the two different respective semantic classes of the four semantic classes.

For example, Group 2a of Level 2 may receive any input from Level 1, the neurons of Group 2a may provide output to both Group 3a and Group 3b, but the neurons of Group 3a and Group 3b do not communicate with each other, or Group 3c or Group 3d, when determining respective output. Similarly, for example, Group 2b of Level 2 may receive any input from Level 1, the neurons of Group 2b may provide output to both Group 3c and Group 3d, but the neurons of Group 3c and Group 3d do not communicate with each other, or Group 3a or Group 3b, when determining respective output. However, neurons of different respective layers within the various groups all communicate.

Furthermore, output of the Group 3a is depicted identifying a first semantic class (e.g. or a first set of subclasses of the first semantic class), output of the Group 3b is depicted as being for the second semantic class (e.g. or a second set of subclasses of the second semantic class), output of the Group 3b is depicted as being for the third semantic class (e.g. or a third set of subclasses of the second semantic class), and output of the Group 3d is depicted as being for the fourth semantic class (e.g. or a fourth set of subclasses of the second semantic class).

Hence, the NN 103 comprises three levels of, respectively one, two and four groups. In this example, the connections between Group 2a and Group 2b are disconnected. The NN 103 hence includes 6 input connections (e.g. one to each neuron in Group 1), 6x6 interneuron connections for the first group, 3x3x2 interneuron connections for the groups in the second level, 2x2x2 + 1x1x2 interneuron connections for the groups in the third level and 6 output connections for a total of 76 connections. As such the NN 103 represents a 37% reduction in connections as compared to the NN 10, which may result in the NN 103 being up to 37% faster and/or more computationally efficient then the NN 10; regardless the NN 103 is generally faster and and/or more computationally efficient then the NN 10.

FIG. 3 further depicts that different groups may have different numbers of neurons. For example, Group 3a and Group 3d include more neurons than Group 3b and Group 3c. Similarly, it is depicted that the levels may have different numbers of layers. For example, Levels 1 and Level 2 both contain only 1 layer, however Level 3 contains 3 layers.

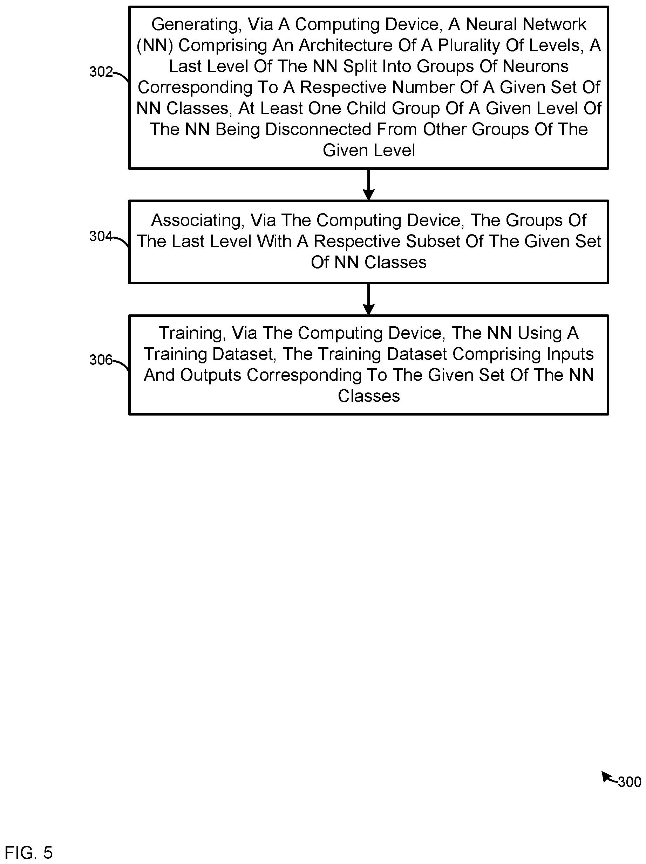

As will be described with reference to FIG. 5 to FIG. 13, the architectures of levels and groups of NNs provided herein, such as the NNs 102, 103, are further understood to be defined by semantic relationships between the classes that the NNs are trained to identify.

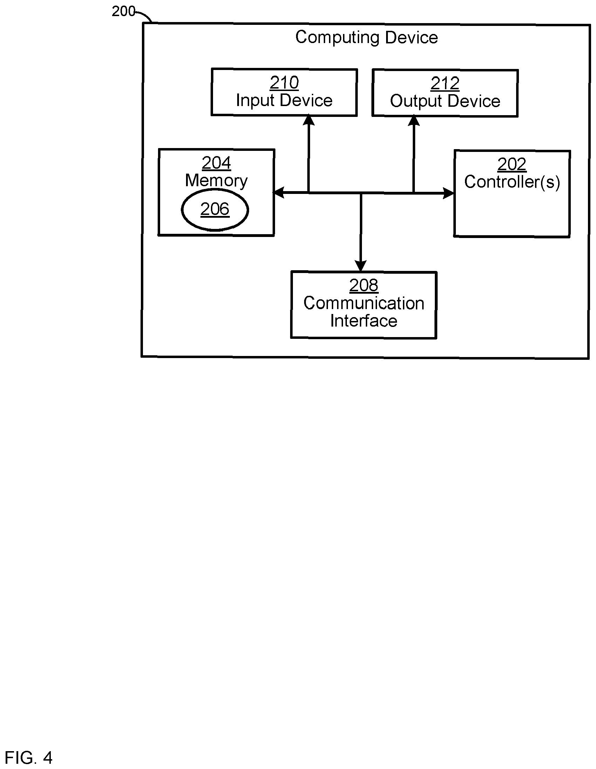

However, prior to discussing these relationships, attention is next directed to FIG. 4, which depicts an example system and/or computing device for 200 for implementing a computationally efficient neural network. While depicted as one device, the computing device 200 may comprise one or more computing devices and/or one or more cloud computing devices that may be geographically distributed.

As shown in FIG. 4, the computing device 200 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which may enable the computing device 200 to communicate with the other computing devices via a network (not depicted). The communication interface 208 therefore may include any necessary components (e.g., network interface controllers (NICs), radio units, and the like) to communicate via a network. The specific components of the communication interface 208 may be selected based on upon the nature of a network with which the communication interface 208 is communicating.

As depicted, the computing device 200 may also include at least one input device 210 connected to the controller 202, such as a keyboard, a pointing device, a microphone, and the like, and at least one output device 212 connected to the controller 202, such as a display screen, a speaker, and the like.

The components of the computing device 200 mentioned above may be deployed in a single enclosure, or in a distributed format. In some examples, therefore, the computing device 200 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 200; regardless, the controller 202 is understood to have access to the memory 204.

The memory 204 also stores a plurality of computer-readable programming instructions, executable by the controller 202, in the form of various applications, including the application 206. As will be understood by those skilled in the art, the controller 202 executes the instructions of the application 206 in order to perform a set of operations defined by the instructions contained therein including, but not limited to, the blocks of a method described with respect to FIG. 5. In the description below, the controller 202, and more generally the computing device 200 are understood to be configured to perform those actions. It will be understood that they are so configured via the execution (by the controller 202) of the instructions of the application 206 stored in the memory 204. Put another way, the computing device 200 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 5.

Attention is now directed to FIG. 5 which depicts a flowchart representative of a method 300 a method for implementing a computationally efficient neural network. The operations of the method 300 of FIG. 5 correspond to machine readable instructions that are executed by the computing device 200, and specifically the controller 202 of the computing device 200. In the illustrated example, the instructions represented by the blocks of FIG. 5 are stored at the memory 204 for example, as the application 206. The method 300 of FIG. 5 is one way in which the computing device 200 and/or the controller 202 may be configured. Furthermore, the following discussion of the method 300 of FIG. 5 will lead to a further understanding of the computing device 200.

The method 300 of FIG. 5 need not be performed in the exact sequence as shown and likewise various blocks may be performed in parallel rather than in sequence. Accordingly, the elements of method 300 are referred to herein as "blocks" rather than "steps." The method 300 of FIG. 5 may be implemented on variations of the computing device 200, as well.

In the discussion of the method 300, it is understood that when groups are described as being connected or disconnected, such connection or disconnections are between respective neurons of the groups.

Furthermore, while the method 300 is described as being implemented by the computing device 200, it is understood that the method 300 may be implemented by more than one computing device 200 and/or at least one computing device 200.

At a block 302, the controller 202, and/or the computing device 200, generates a neural network (NN) comprising an architecture of a plurality of levels of respective groups of respective neurons, a last level of the NN split into groups corresponding to a respective number of a given set of NN classes, at least one child group of a given level of the NN being disconnected from other groups of the given level.

In some examples (e.g. as depicted in FIG. 2 and FIG. 3), respective neurons of all groups of a given level of the NN are disconnected from respective neurons of the other groups of the given level of the NN. However, respective neurons within the groups are connected.

It is further understood that generating the NN at the block 302 may include receiving input specifying a number of levels of the NN, a number of groups of each level, and connections between groups of adjacent levels, and the controller 202 and/or the computing device 200 may generate the NN accordingly. Alternatively, or in addition, the controller 202 and/or the computing device 200 may alter a standard NN architecture of an existing (e.g., untrained) standard NN (e.g., as depicted in FIG. 1), according to the specified number of levels, specified number of groups of each level, and specified connections between the groups of adjacent levels and/or specified connections between the groups of a same level. Such altering may include disconnecting groups between levels and disconnecting groups within a level.

It is further understood that the specified structure of the NN may be based on semantic relationships and/or clustering of a training dataset.

An example of such a structure and/or architecture has been previously described herein. The example is further described at least with respect to FIG. 2, FIG. 3, FIG. 6 to FIG. 13.

Regardless, such generating of the NN at the block 302 is may include disconnecting and/or preventing certain connections between groups of adjacent levels such when a total number of the respective groups of the given level is greater than two, at least one child group of the given level has a number of parent groups from a previous adjacent level that is less than a total number of the respective groups of the previous adjacent level, such that the at least one child group is disconnected from at least one group of the previous adjacent level.

Alternatively, or in addition, such generating of the NN at the block 302 may include disconnecting and/or preventing certain connections between groups within a same level, such that at least two groups in the level are disconnected.

Alternatively, or in addition, such generating of the NN at the block 302, may include, disconnecting a given group of a given level from groups of a previous adjacent level, and further disconnecting the given group from other groups in the given level that are connected to groups of the previous adjacent level from which the given group is disconnected.

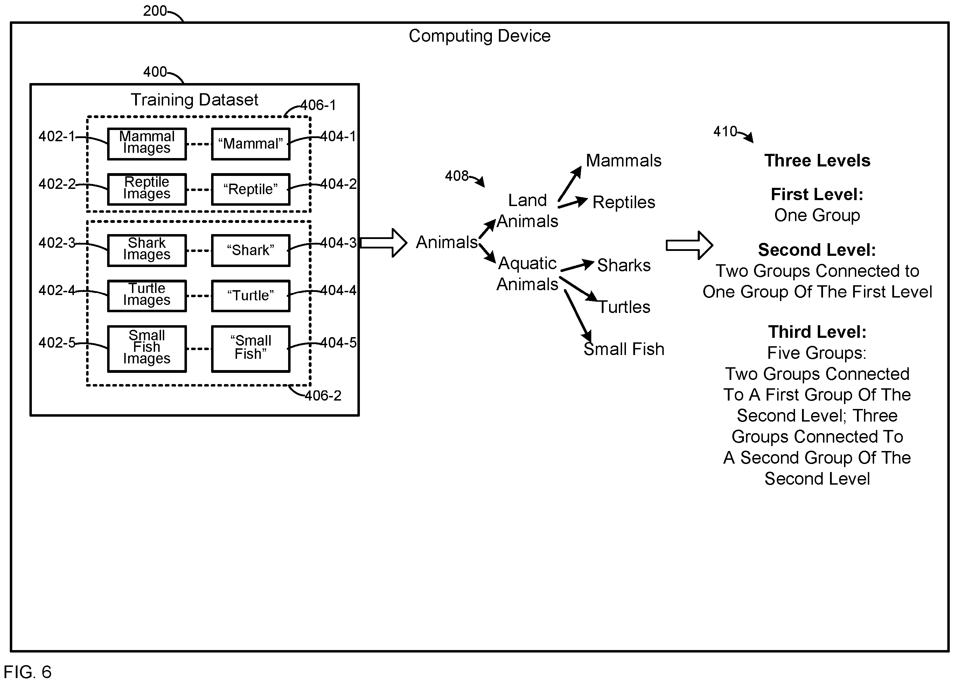

The selection of which groups of adj acent groups are connected and which groups of adjacent groups are not connected, as well as which groups within a level are disconnected, may be based on a training dataset, as explained in further detail with respect to at least FIG. 6 to FIG. 12.

Put another way, the specified structure of the NN may be based on semantic relationships and/or semantic clustering of a training dataset.

At a block 304, the controller 202, and/or the computing device 200, associates the groups of the last level with a respective subset of the given set of NN classes.

The respective subset is understood to be different from subclasses of the NN classes. For example, the respective subset of the given set of NN classes is understood to include one or more of the NN classes, whereas a subclass of an NN class comprises classes that all belong to the NN class.

At a block 306, the controller 202, and/or the computing device 200, trains the NN using a training dataset, the training dataset comprising inputs and outputs corresponding to the given set of the NN classes. Indeed, the given set of the NN classes may be generated from and/or defined by the training dataset.

For example, it is understood that the NN may be trained to classify images that are from given classes represented by images of the training dataset. Hence, a number of groups of the last level may correspond to the number of the given classes of the training dataset, and each group of a last level may be associated with a given class represented by the images of the training dataset. Put another way, the given set of the NN classes may be generated from and/or defined by the training dataset, as described herein with respect to at least FIG. 6 to FIG. 12.

Furthermore, as has been previously described, the training dataset may be semantically structured and/or may include semantically related data, such that different types of training inputs may be grouped using labels.

Hence, when the training dataset includes a given number of different labels, which may correspond to the NN classes, a number of the groups of the last level may correspond to the given number, and each of the groups of the last level may be associated with a given label (or one or more given labels that belong the same NN class) from the training dataset.

Such association may occur via the training of the NN. For example, and returning to the mammals, reptiles, sharks, turtles and small fish example, presuming five groups in a last level of the NN, images of mammals from the training dataset may be used as training input to the NN during the training, and the corresponding label of "mammal" (or a label identifying a specific type of mammal) may be used as the training output for the given group of the last level that is designated to correspond to identifying mammals.

Similarly, images of reptiles from the training dataset may be used as training input to the NN during the training, and the corresponding label of "reptile" (or a label identifying a specific type of reptile) may be used as the training output for the given group of the last level that is designated to correspond to identifying reptiles.

Similarly, images of sharks from the training dataset may be used as training input to the NN during the training, and the corresponding label of "shark" (or a label identifying a specific type of shark) may be used as the training output for the given group of the last level that is designated to correspond to identifying sharks.

Similarly, images of turtles from the training dataset may be used as training input to the NN during the training, and the corresponding label of "turtle" (or a label identifying a specific type of turtle) may be used as the training output for the given group of the last level that is designated to correspond to identifying turtles.

Similarly, images of small fish from the training dataset may be used as training input to the NN during the training, and the corresponding label of "small fish" (or a label identifying a specific type of small fish) may be used as the training output for the given group of the last level that is designated to correspond to identifying small fish.

Hence, once trained, a new image of one or more of mammals, reptiles, sharks, turtles and small fish may be input the NN, and the groups of the last level may generate output indicating whether one or more of mammals, reptiles, sharks, turtles and small fish are present in the new image.

The method 300 may include other features.

For example, the controller 202 and/or the computing device 200 may divide intermediate levels of the NN, between a first level and the last level of the NN, into respective groups, such that at least two of the respective groups of a given intermediate level are disconnected from each other within the given intermediate level, and disconnected from at least one previous group of a previous adjacent level.

Put another way, at least one child group of a given intermediate level of the NN may have a number of parent groups from a previous adjacent level that is less than a total number of groups of the previous adjacent level, such that the at least one child group is disconnected from at least one group of the previous adjacent level. In these examples, intermediate groups within an intermediate level that are connected to different parent groups may be disconnected from each other.

Furthermore, in some examples, every group in an intermediate level may be connected to only one group in the previous adjacent level and connected to one of more groups in a next adjacent level. In these examples, intermediate groups within an intermediate level may all be disconnected from each other.

Put another way, every group in an intermediate level may be connected to only one group in the previous adjacent level and connected to one of more of the respective groups in a next adjacent level, with all the groups in the intermediate level being disconnected from each other.

Hence, such disconnections may depend on how many groups are in an intermediate level and a previous adjacent level. For example, when there is only one group in a previous adjacent level, that one group is understood to be connected to all the groups of the next adjacent level. However, when there are two or more groups in a previous adjacent level, groups of a next adjacent level may be disconnected from at least one respective group of the previous adjacent level (e.g. different groups of a next adjacent level may be disconnected from different respective groups of a previous adjacent level).

Indeed, in some examples, the respective groups of the intermediate levels and the respective groups of the last level may form a tree structure.

In some examples, the controller 202 and/or the computing device 200 may determine the given set of the NN classes, from example from semantic relationships between components of the training dataset. For example, the controller 202 and/or the computing device 200 may analyze the training dataset and determine that the given set of the NN classes corresponds to the number of labels, as previously described.

In other examples, the given set of the NN classes may be received at the controller 202 and/or the computing device 200 via one or more of the communication interface 208 and/or the input device 210. Put another way, the given set of the NN classes may be determined (e.g., based on the training dataset) external to the computing device 200 and may be input to the computing device 200 via one or more of the communication interface 208 and/or the input device 210.

Indeed, the controller 202 and/or the computing device 200 may generate an overall architecture of the NN, in terms of the plurality of the levels, the respective groups, and connections between the respective groups, based on semantic relationships between the NN classes, for example as defined by the training dataset.

Similarly, the controller 202 and/or the computing device 200 may determine semantic relationships between items of the training dataset to generate the NN classes.

In particular, and again referring to the mammals, reptiles, sharks, turtles, and small fish example, the controller 202 and/or the computing device 200 may analyze the training dataset and determine that the training dataset comprises images of animals, which are divided into land animals and aquatic animals, and further determine that the land animals include mammals, reptiles, and that the aquatic animals include sharks, turtles, and small fish. As such, the controller 202 and/or the computing device 200 may structure the NN accordingly, with three levels as has been previously described: a first level with one group for animals; a second (e.g., intermediate) level with two groups respectively for land and aquatic animals, with both groups connected to the animals group of the first level; and a last level with five groups, with two groups respectively for mammals and reptiles connected to the land animals group of the second level (and disconnected from the aquatic animals group of the second level), and three groups respectively for sharks, turtles and small fish connected to the land aquatic group of the second level (and disconnected from the land animals group of the second level). However, it is understood that such designations for the groups (e.g., animals group etc.) are only for clarity and the NN does not, itself, designate such groups.

Furthermore, neurons of a given group of a given level of the NN are understood to be disconnected from respective neurons of other groups of the given level of the NN. For example, as in some examples, each child group of a given level is connected only to one parent group of a previous adjacent level, such that calculations of neurons of child groups in the given level are disconnected from calculations of neurons other child groups in the given level.

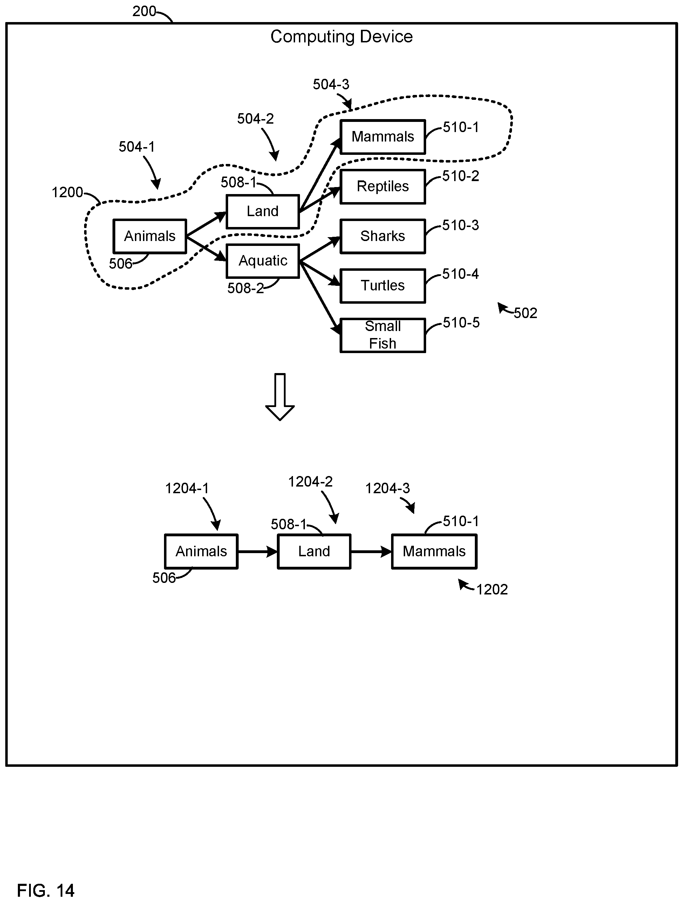

In some examples, the controller 202 and/or the computing device 200 may, after the training (e.g., of the block 306): for a given subset of the NN classes, select a portion of given groups from a first level of the NN to the last level of the NN that correspond to the given subset of the NN classes, and the given groups of the portion including intermediate groups that connect the one or more groups of the last level of the NN that correspond to the given subset of the NN classes to the first level, and excluding the other groups; and generate a new NN comprising the portion. The NN is understood to be for specifically identifying inputs of the given subset of the NN classes. An example of such a selection is described herein with respect to FIG. 14.

In particular, the new NN is understood to be trained to identify and/or classify only those NN classes of the given subset.

As described heretofore it is understood that the training dataset may comprise images, and the NN classes of the block 302 may comprise descriptions of the images.

However, in other examples, the training dataset may comprise words, and the NN classes may represent one or more of: tasks; topic classification; sentiment analysis; entity recognition, amongst other possibilities, and the like as represented by respective sets of words. Put another way, the NN classes may correspond to words that describe one or more of: tasks; topic classification; sentiment analysis; entity recognition, amongst other possibilities

Attention is next directed to FIG. 6, FIG. 7, FIG. 8, FIG. 9, FIG. 10, FIG. 11, FIG. 12, FIG. 13, FIG. 14, FIG. 15, FIG. 16 and FIG. 17, which depict examples of aspects of the method 300. In the following discussion, it is again understood that groups are of neurons, that may be connected or disconnected to respective neurons of groups in adjacent levels, as well as connected or disconnected to respective neurons of groups in a same level.

With attention first directed to FIG. 6, the computing device 200 has received a training dataset 400 comprising images 402-1, 402-2, 402-3, 402-4, 402-5, interchangeably referred to hereafter, collectively, as the images 402, and, generically, as an image 402. This convention will be used elsewhere in the present specification. For example, as depicted, each set of images 402 is associated with a respective label 404-1, 404-2, 404-3, 404-4, 404-5 (e.g., labels 404 and/or a label 404). In particular, the images 402-1 are of mammals and associated with a label 402-1 of "Mammal", the images 402-2 are of reptiles and associated with a label 402-2 of "Reptile", the images 402-3 are of sharks and associated with a label 402-3 of "Shark", the images 402-4 are of turtles and associated with a label 402-4 of "Turtle", and the images 402-5 are of small fish and associated with a label 402-5 of "Small Fish".

However, while the labels 404 are understood to identify only a specific class (e.g. an NN class) of objects in the images 402, the labels 404 may identify subclasses of a specific class.

For example, the images 402-1 of mammals may be labelled according to subclasses of mammals, such as labels of "Lion", "Tiger" or "Dog".

Similarly, the images 402-2 of reptiles may be labelled according to subclasses of reptiles, such as labels of "Snake", or "Lizard".

Similarly, the images 402-3 of sharks may be labelled according to subclasses of sharks, such as labels of "Great White", "Hammerhead" or "Reef'.

Similarly, the images 402-4 of turtles (e.g. sea turtles) may be labelled according to subclasses of turtles, such as labels of "Green", "Hawksbill" or "Leatherback".

Similarly, the images 402-5 of turtles (e.g. sea turtles) may be labelled according to subclasses of turtles, such as labels of "Clownfish", "Angelfish" or "Damselfish".

While not depicted, all the images 402 may be further labelled as "Animals", the images 402-1, 402-2 may be further labelled as "Land Animals", and the images 402-3, 402-4, 402-5 may be further labelled as "Aquatic Animals".

Regardless, it is understood that the computing device 200 may determine that all the images 404-1 may be of a first semantic of mammals, the images 404-2 may be of a second semantic of reptiles, the images 404-3 may be of a third semantic of sharks, the images 404-4 may be of a second semantic of turtles (e.g. sea turtles), and the images 404-5 may be of a second semantic of small fish.

The computing device 200 may further cluster together the images 404-1 mammals and the images 404-2 of reptiles into a semantic class of "Land Animals", and cluster together the images 404-3 sharks, the images 404-4 of turtles, and the images 404-5 of small fish into a semantic class of "Aquatic Animals".

The computing device 200 may further cluster together the images 404-1, 404-2 of "Land Animals", and the images 404-3, 404-4, 404-5 of "Aquatic Animals" into a semantic class of "Animals".

Such clustering may occur using any suitable combination of programmatic algorithms and machine learning algorithms.

Regardless the computing device 200, working backwards from the more specific semantic classes to the more general semantic classes, may hence generate a semantic relationship structure 408 for an NN from the training dataset 400, for example which indicates that mammals and reptiles are subsets of land animals (e.g., as indicated by arrows pointing from "Land Animals" to each of "Mammals" and "Reptiles" in the structure 408), and which further indicates that sharks, turtles and small fish are subsets of aquatic animals (e.g., as indicated by arrows pointing from "Aquatic Animals" to each of "Sharks", "Turtles", and "Small Fish" in the structure 508). Similarly, the semantic relationship structure 408 indicates that land animals and aquatic animals are subsets of animals.

From such a semantic relationship structure 408, the computing device 200 may generate an architecture indication 410 for an NN indicating that such an NN has three levels, with one group in a first level, two groups in a second level, each connected to the first group, and five groups in a third level, with two groups of the third level connected to a first group of the second level, and three groups of the third level connected to a second group of the second level. The third level is understood to be a last level.

Indeed, the final number of subsets of the land animals and the aquatic animals, in this example five subsets, that defines a number of groups of the last level is understood to define the NN classes identified by a resulting NN.

Such an architecture indication 410 may further indicate which labels 404 of the training dataset 400 are associated with which groups of the last level. For example, as the architecture indication 410 indicates that the semantically related mammals and reptiles labels 404 of the training dataset 400 resulted in two groups of the last level connected to one group of the second level, one of those two groups is understood to be associated with the label 404-1 "Mammal" and the other of those two groups is understood to be associated with the label 404-2 "Reptile". Similar associations occur between the labels 404-3, 404-4, 404-5 and the three groups of the last level connected to the other group of the second level.

Similarly, when the labels 404 are for subclasses of identified classes (e.g. labels of "Lion", "Tiger" or "Dog" in place of "Mammal"), the labels 404 may be grouped according to semantic relationships therebetween (e.g. all of lions, tigers and dogs are mammals), and associated with the "Mammal" group.

Alternatively, the architecture indication 410 may be received at the computing device 200 via the communication interface 208 and/or the input device 412.

However, an architecture of an NN that is to be generated may be specified and/or determined in any suitable manner.

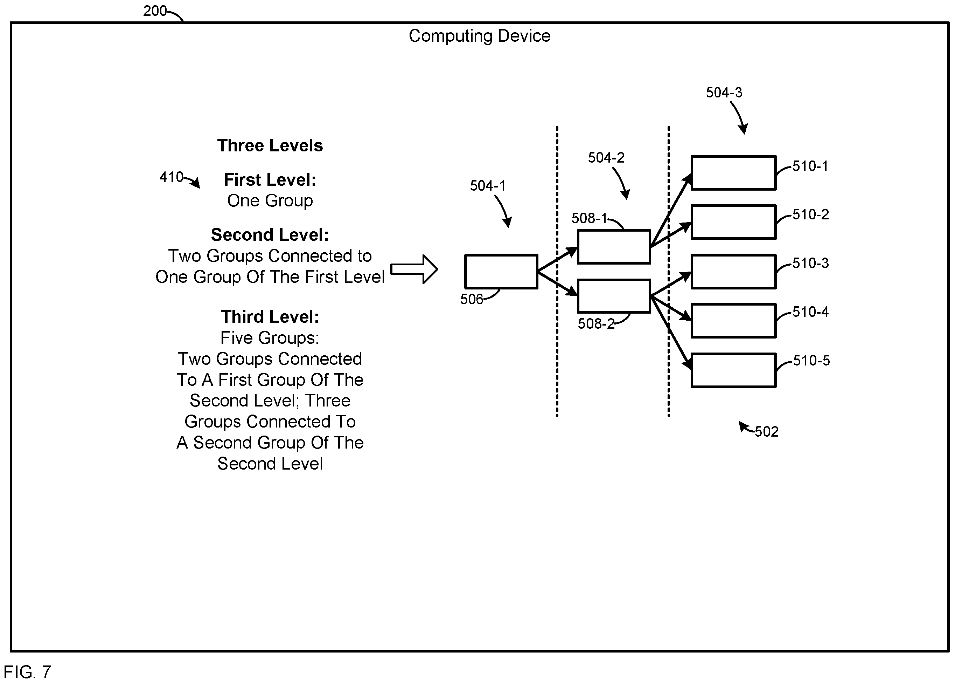

Attention is next directed to FIG. 7 which depicts the computing device 200 generating (e.g., at the block 302 of the method 300) an NN 502 from the architecture indication 410. As depicted, the NN 502 comprises a first level 504-1, a second level 504-2, and a third or last level 504-3 (e.g., levels 504, and/or a level 504), as indicated by the architecture indication 410. For clarity in FIG. 7, the levels 504 are separated by broken lines.

As depicted, the first level 504-1 comprise one group 506, the second level 504-2 comprises three groups 508-1, 508-2 (e.g., the groups 508 and/or a group 508), and the third level comprises five groups 510-1, 510-2, 510-3, 510-4, 510-5 (e.g., the groups 510 and/or a group 510), as indicated by the architecture indication 410.

Furthermore, while connections between the groups 504, 508, 510 are indicated by single arrows, a respective arrow between two groups is understood to include any suitable number of connections between neurons of the two groups, similar to as depicted in FIG. 2 and FIG. 3.

As depicted, the groups 508 of the second level 504-2 are each connected to the group 506 of the first level 504-1, the groups 510-1, 510-2 of the last level 504-2 are each connected to a first group 508-1 of the second level 504-2, and the groups 510-3, 510-4, 510-5 of the last level 504-2 are each connected to a second group 508-2 of the second level 504-2, as indicated by the architecture indication 410. However, the groups 510-1, 510-2 of the last level 504-2 are not connected to the second group 508-2 of the second level 504-2 and the groups 510-3, 510-4, 510-5 of the last level 504-2 are not connected to the first group 508-1 of the second level 504-2.

Furthermore, associations between the groups 510 of the last level 504-3 and the labels 404 of the training dataset 400 may occur as described herein with respect to the architecture indication 410.

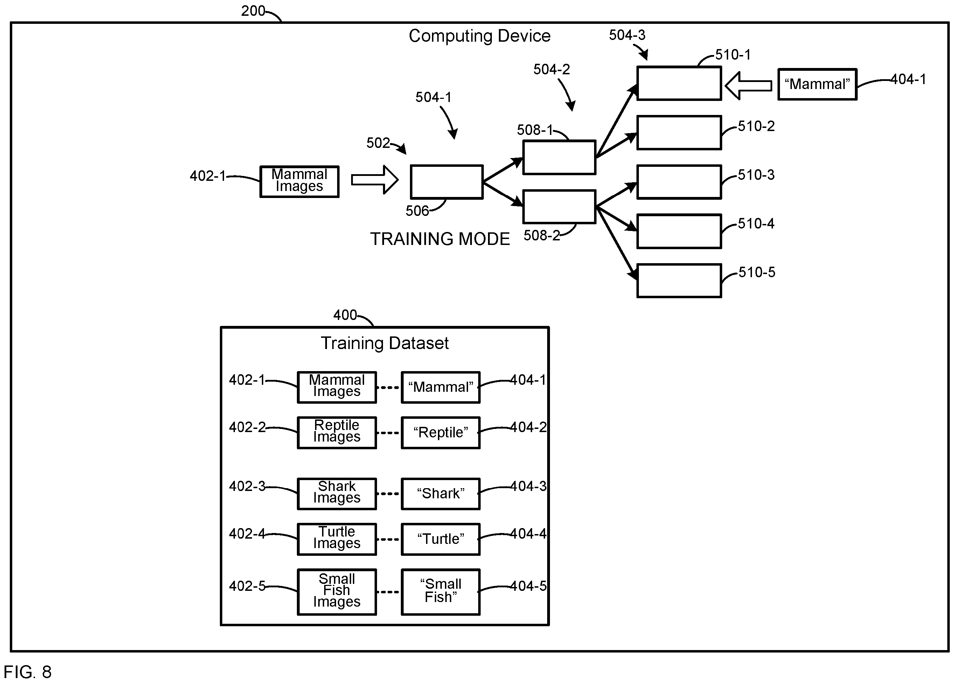

Attention is next directed to FIG. 8, FIG. 9, FIG. 10, FIG. 11, and FIG. 12, which depict the NN 502 in a training mode. In the training mode, each of the sets of images 402, with their associated labels, are used to train the NN 502.

For example, with attention first directed to FIG. 8, the mammal images 402-1 are used a training input to the group 506 of the first level 504-1, and the associated label 404-1 is used as training output for the group 510-1 of the last level 504-3. Put another way, an NN class of "Mammal" is associated (e.g., at the block 304 of the method 300) with the group 510-1 of the last level 504-3, while training (e.g., at the block 306 of the method 300) the NN 502 using the training dataset 400.

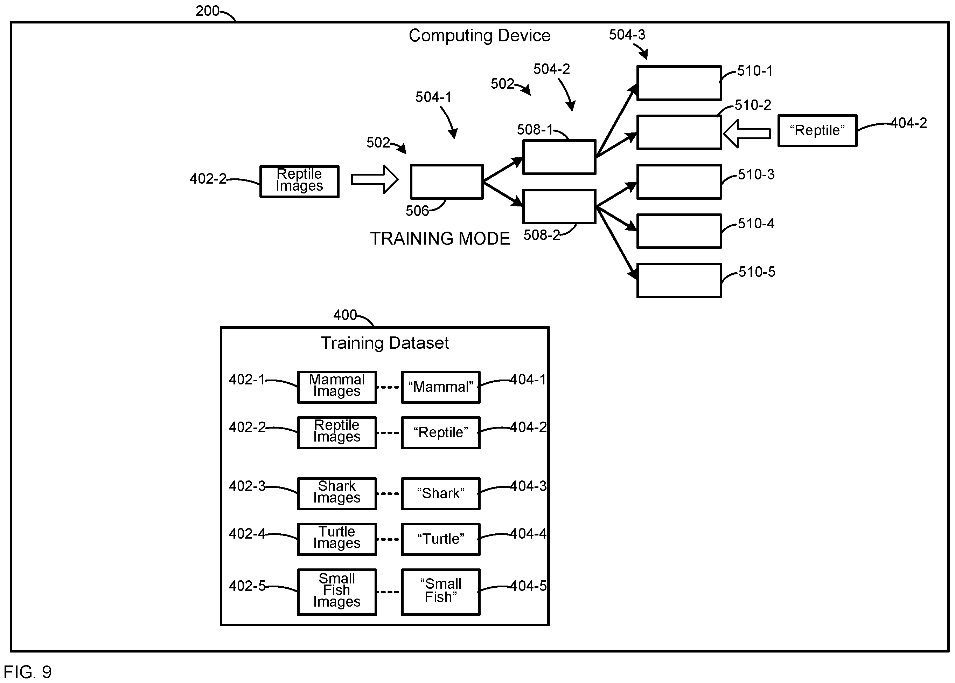

With attention next directed to FIG. 9, the reptile images 402-2 are used a training input to the group 506 of the first level 504-2, and the associated label 404-2 is used as training output for the group 510-2 of the last level 504-3. Put another way, an NN class of "Reptile" is associated (e.g., at the block 304 of the method 300) with the group 510-2 of the last level 504-3, while training (e.g., at the block 306 of the method 300) the NN 502 using the training dataset 400.

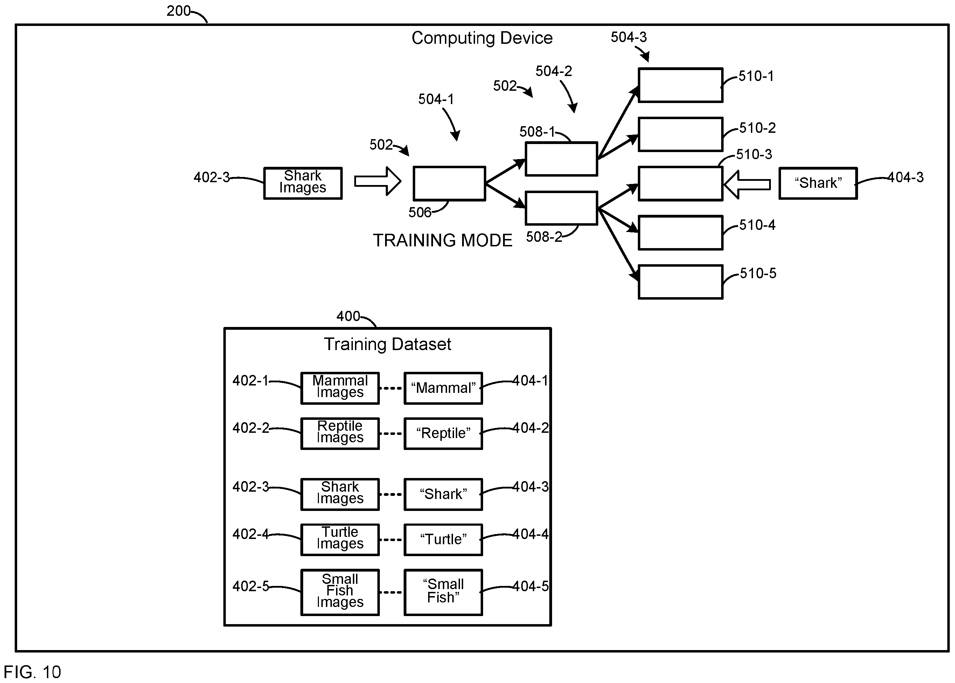

With attention next directed to FIG. 10, the shark images 402-3 are used a training input to the group 506 of the first level 504-3, and the associated label 404-3 is used as training output for the group 510-3 of the last level 504-3. Put another way, an NN class of "Shark" is associated (e.g., at the block 304 of the method 300) with the group 510-3 of the last level 504-3, while training (e.g., at the block 306 of the method 300) the NN 502 using the training dataset 400.

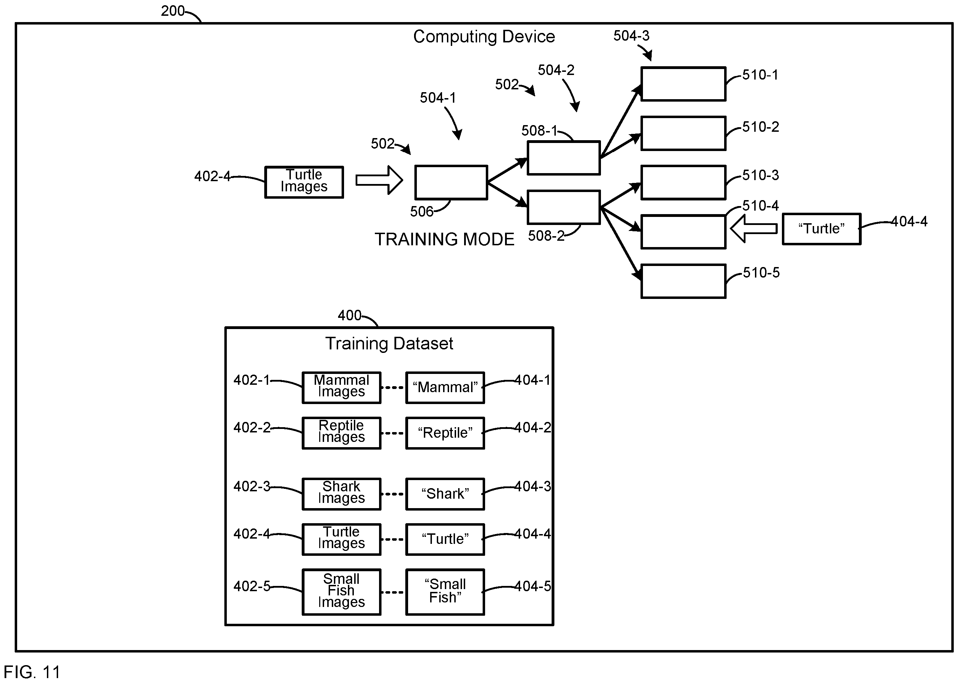

With attention next directed to FIG. 11, the turtle images 402-4 are used a training input to the group 506 of the first level 504-4, and the associated label 404-4 is used as training output for the group 510-4 of the last level 504-4. Put another way, an NN class of "Turtle" is associated (e.g., at the block 304 of the method 300) with the group 510-4 of the last level 504-4, while training (e.g., at the block 306 of the method 300) the NN 502 using the training dataset 400.

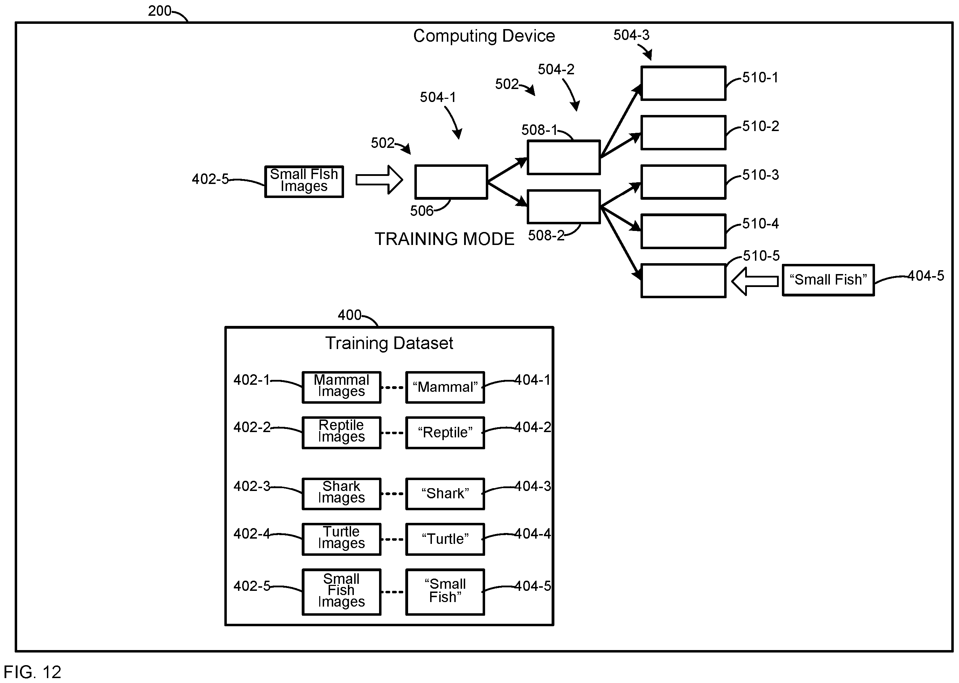

With attention next directed to FIG. 12, the small fish images 402-5 are used a training input to the group 506 of the first level 504-5, and the associated label 404-5 is used as training output for the group 510-5 of the last level 504-5. Put another way, an NN class of "Small Fish" is associated (e.g., at the block 304 of the method 300) with the group 510-5 of the last level 504-5, while training (e.g., at the block 306 of the method 300) the NN 502 using the training dataset 400.

While not depicted in FIG. 8, FIG. 9, FIG. 10, FIG. 11 and FIG. 12, with the labels 404 used as training output, a score of "100" may be used for the particular label 404 presently being used for a particular group 510 of the last level 504-3, in association with a particular image 402 being used as training input. Indeed, such an example illustrates positive training data.

Furthermore, while also not depicted in FIG. 8, FIG. 9, FIG. 10, FIG. 11 and FIG. 12, other labels 404 may be used as training input with associated groups 510 of the last level 504-3, but with scores of "0". Indeed, such an example illustrates negative training data.

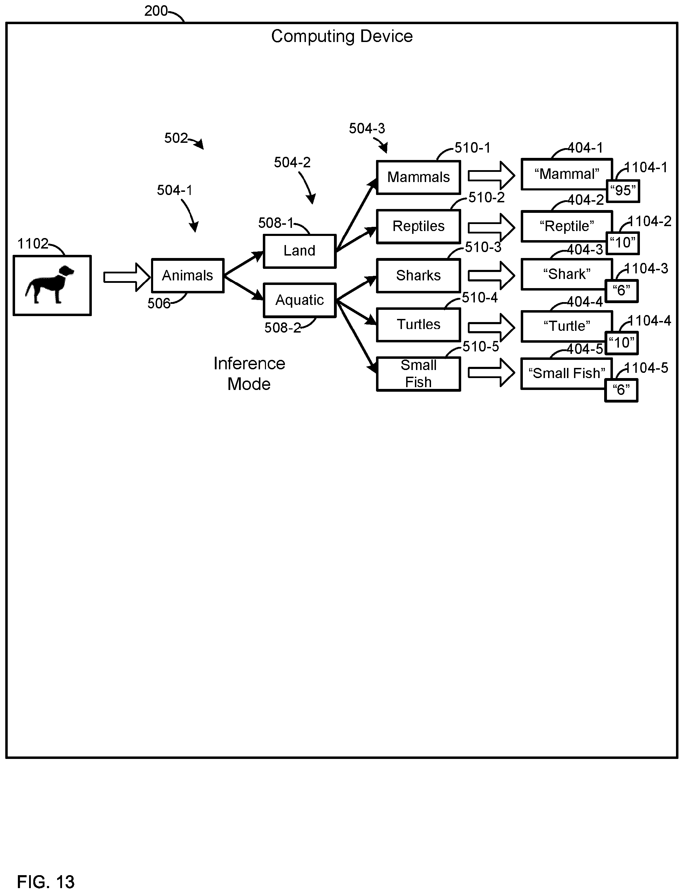

Attention is next directed to FIG. 13, which depicts the NN 502 in an inference mode after training. As depicted, it is understood that the group 506 of the first level 508-1 is now trained to identify animals, the groups 508-1, 508-2 of the second level 508-2 are now trained to respectively identify land animals and aquatic animals in output from the group 506 of the first level 508-1, the groups 510-1, 510-2 of the third level 508-2 are now trained to respectively identify mammals and reptiles in the land animals identified in the output from the group 508-1 of the second level 508-2, and the groups 510-3, 510-4, 510-5 of the third level 508-2 are now trained to respectively identify sharks, turtles and small fish in the aquatic animals identified in the output from the group 508-2 of the second level 508-2.

Furthermore, as neurons of the groups 510 are disconnected from respective neurons of at least one group 508 of the previous level 504-2, and disconnected from each other, the NN 502 is computationally faster than neurons of the groups 510 of the third level 504-3 were connected to both (e.g., all) of the respective neurons the groups 508 of the third level 504-3m and to respective neurons of the other groups 510.

As also depicted in FIG. 13, an image 110 of a dog (e.g., a mammal) is input to the NN 502, and the NN 502 identifies a "Mammal" in the image 110. In particular, the group 510-1 outputs the label 404-1 with a score 1104-1 of "95" which may be above a threshold score (e.g., of 80, and/or any other suitable number).

In contrast, the other groups group 510-2, 510-3, 510-4, 510-5 output respective labels 404-2, 404-3, 404-4, 404-5, with respective scores 1104-2, 1104-3, 1104-3, 1104-5 of "10", "6", "10" and "6", all understood to be below the threshold score. The scores 510-1, 510-2, 510-3, 510-4, 510-5 are interchangeably referred to hereafter as the scores 1104 and/or a score 1104.

As such, the computing device 200 determines that the image 110 includes a mammal, as the score 1104-1 is the only score 1104 that is above the threshold score.

While the example of FIG. 13 depicts output identifying an NN class of "Mammal" as being the output of the NN 502, it is understood that the group 510-1 may be trained to more specifically identify a subclass of the NN class of "Mammal", such as "Dog", and identify a "Dog" in the image 110 as the output with the respective score 1104-1 of "95". Indeed, output from each of the groups 510 of the last level 504-3 may include output identifying respective subclasses with respective scores. For example, the group 510-1 may output "Lion" with a score of 52%, "Tiger" with a score of "58%" and "Dog" with a score of 95%, indicating that the image 1102 is of a dog (e.g. as the scores of 52% and 58% are below a threshold of 80%).

Furthermore, output from the group 508-2 may be low (e.g. below a threshold, such as 30%, 40%, 50%), such that the groups 510-3, 510-4, 510-5 do not activate and hence do not generate any output.

Attention is next directed to FIG. 14, which depicts a selection 1200 of a portion of given groups 506, 508, 510 from the first level 504-1 of the NN 502 to the last level 504-3 of the NN 502 that correspond to a given subset of the NN classes associated with the groups 510 of the last level 504-3. For example, as depicted, the given subset of the NN classes may be a "Mammal" class, and the selection 1200 of the groups 506, 508, 510 comprises the group 506 of the first level 504-1 (e.g., that identifies animals), the group 508-1 of the second level 504-2 (e.g., that identifies land animals), and the group 510-1 of the third level 504-3 (e.g., that identifies mammals). The selection 1200 may occur via one or more of the communication interface 208 and the input device 210.

In the depicted example, the selection 1200 is used to generate a new NN 1202 that comprises the groups 506, 508-1, 510-2 and the connections therebetween that exist in the parent NN 502. Indeed, in prior art NNs (e.g., as in FIG. 1), such a selection 1200 would not be possible due to the connections between all of the groups of the adjacent nodes and connections between groups within a given level. Put another way, if groups of the NN 10 were selected and used to generate a new NN, the new NN would generally be non-functional as selected groups used to generate the new NN rely on connections, not only to selected groups, but unselected groups.

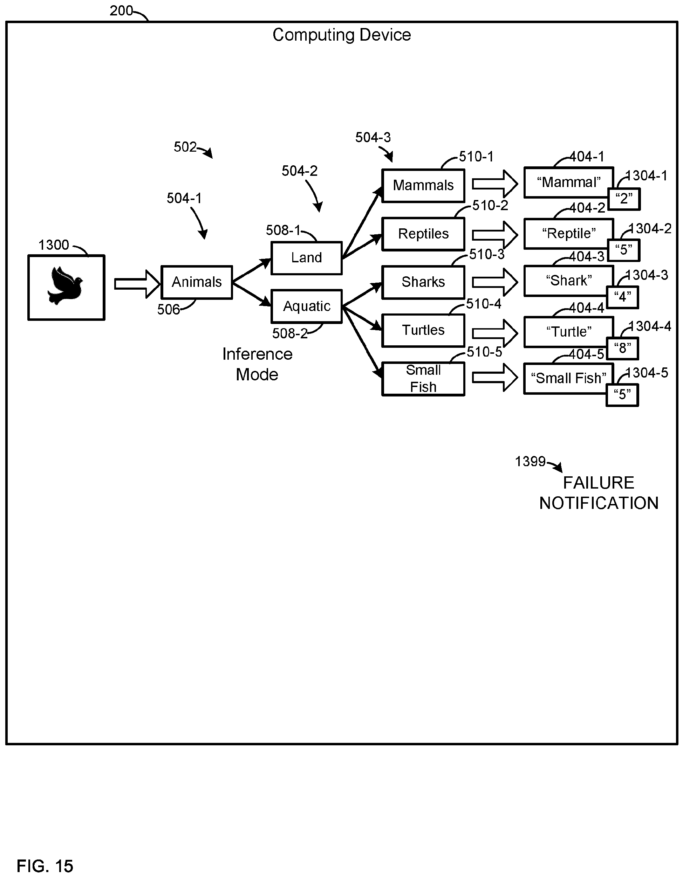

Attention is next directed to FIG. 15 which depicts an image 1300 of a bird being used as input to the NN 502 in the inference mode. As with the example of FIG. 1, the NN 502 outputs respective labels 404 with respective scores 1304-1, 1304-2, 1304-3, 1304-4, 1304-5 (e.g., scores 1304 and/or a score 1304) of "2", "5", "4", "8" and "5". In particular, as the NN 502 has not been trained to identify birds in images, all of the scores 1304 are below a threshold score, indicating that the NN 502 has failed to identify any animals in the image 1300.

In some examples, when such an event occurs, a failure notification 1399 may be generated and provided (e.g., via the communication interface 208 and/or the output device 212), which may result in an updated training dataset 1400 (e.g., updated with respect to the training dataset 400) being received, which includes the images 402 and the labels 404 of the previous training dataset 400, but with images 1402-1, 1402-2 (e.g., images 1402 and/or an image 1402) of winged animals being added to the training dataset 1400, and more specifically images 1402-1 of birds and images 1404-2 of butterflies, with respective labels 1404-1, 1404-2 (e.g., labels 1404 and/or a label 1404). While this example includes adding butterfly images 1404-2 to the updated training dataset 1400, in other examples, the butterfly images 1404-2 may be omitted; indeed the butterfly images 1404-2 are included merely to illustrate how the failure indication may be used to broaden the classes that an NN may identify.

For example, it is understood that the images 1402 may also belong to a same semantic class of "Animals" as the images 402, but the images 1402 also belong to a semantic class 1406 of winged animals different from the semantic classes 406 of land animals and aquatic animals. As such, it is understood that the updated training dataset 1400 may be used to modify the NN 502, for example to generate a new NN 1412, to add an additional group 1418 to the second level 504-2 that may be trained, using the winged animal images 1402 to identify winged animals in output from the group 506 of the first level 504-1, the additional group 1418 connected to the group 506.

Furthermore, the new NN 1412 further includes two new groups 1420-1, 1420-2 (groups 1420 and/or a group 1420) added to the third level 504-3 that are connected to the new group 1418 of the second level 504-2, but disconnected to the other groups 508 of the second level 504-2. Two new groups 1420-1, 1420-2 may be trained, using the winged animal images 1402 to respectively identify birds and butterflies in winged animals identified in output from the group 1418 of the second level 504-2.

Indeed, the state of the new NN 1412 as depicted in FIG. 16 is understood to be after training as the new NN 1412, similar to as depicted in FIG. 8, FIG. 9, FIG. 10, FIG. 11, and FIG. 12, with the bird images 1402-1 and the bird labels 1404-1 used to train the groups 506, 1418, 1420-1, and the butterfly images 1402-2 and the butterfly labels 1404-2 used to train the groups 506, 1418, 1420-2. Indeed, such training of the new NN 1412 may occur only using the images 1402 and labels 1404, without retraining using the images 402 and the labels 404, as the new groups 1418, 1420 are disconnected from the other groups 508, 510, which may further lead to reduction in computational resource usage.

Hence, it is understood that the new NN 1412 may be generated, not randomly, but in a structured manner, building on the existing architecture of the NN 502, to add groups to existing levels 504, and based on updated semantic relationships between new images 1402 of the updated training dataset 1400, and previously existing images 402.

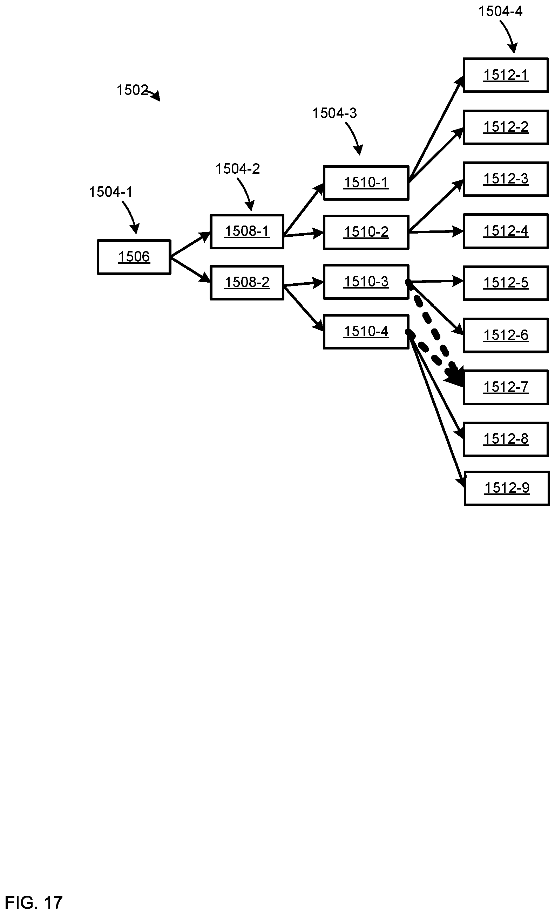

Attention is next directed to FIG. 17 which depicts an NN 1502 generated according to the method 300. While a training dataset used to generate the NN 1502 is not depicted, it is understood that such a training dataset includes various semantic relationships between the training data, such that the NN 1502 results in an architecture comprising:
- Four levels 1504-1, 1504-2, 1504-3, 1504-4 (e.g., levels 1504 and/or a level 1504).
- A first level 1504-1 including one group 1506.
- A second level 1504-2 including two groups 1508-1, 1508-2 (e.g., groups 1508 and/or a group 1508), both connected to the group 1506 of the first level 1504-1, and disconnected from each other.
- A third level 1504-3 including four groups 1510-1, 1510-2, 1510-3, 1510-4 (e.g., groups 1510 and/or a group 1510), with two of the groups 1510-1, 1510-2 connected to the first group 1508-1 of the second level 1504-2, but disconnected from the second group 1508-2 of the second level 1504-2, and with the other two of the groups 1510-3, 1510-4 connected to the second group 1508-2 of the second level 1504-2, but disconnected from the first group 1508-1 of the second level 1504-2. The groups 1510 are furthermore disconnected from each other.
- A fourth level 1504-4 including nine groups 1512-1, 1512-2, 1512-3, 1512-4, 1512-5, 1512-6, 1512-7, 1512-8, 1512-9 (e.g., groups 1512 and/or a group 1512), with:
   --A first pair of the groups 1512-1, 1512-2 connected to the first group 1510-1 of the third level 1504-3, but disconnected from the other groups 1510 of the third level 1504-3.
   --A second pair of the groups 1512-3, 1512-4 connected to the second group 1510-2 of the third level 1504-3, but disconnected from the other groups 1510 of the third level 1504-3.
   --A third pair of the groups 1512-5, 1512-6 connected to the third group 1510-3 of the third level 1504-3, but disconnected from the other groups 1510 of the third level 1504-3.
   --A last of the groups 1512-7, 1512-8, 1512-9 connected to the fourth group 1510-4 of the third level 1504-3. As depicted, the groups 1512-8, 1512-9 are disconnected from the other groups 1510 of the third level 1504-3. In contrast, the group 1512-7 is connected to two groups 1510-3, 1510-4 of the third level 1504-3, but disconnected from the other groups 1510 of the third level 1504-3.

The groups 1512 are furthermore disconnected from each other.

The NN 1502 illustrates that intermediate groups 1510 of the third level 1504-3 (e.g., groups of a level 1504 between the first level 1504-1 and the last level 1504-3) may generally be divided into respective groups 1510 that are disconnected from each other within the given intermediate level 1504-3, and disconnected from at least one previous group 1508 of the previous adjacent level 1504-2. Put another way, at least one child group 1501 of the third level 1504-2 has a number of parent groups 1508 from a previous adjacent level 1504-2 that is less than a total number of groups 1508 of the previous adjacent level 1504-2, such that the at least one child group 1508 is disconnected from at least one group 1508 of the previous adjacent level 1504-2.

It is further understood that an intermediate level of an NN generated according to the method 300 may meet such conditions when there are more than two intermediate groups (e.g., as generally groups of a first intermediate level, that follows a first level are all connected to a first group of the first level as illustrated in the NNs 502, 1502).

However, the NN 1502 further illustrates that not all child groups may have only one parent group. For example, the child group 1512-7 of the fourth level 1504-4 is understood to have two parent groups 1510-3, 1510-4 of the third level 1504-3, though the number of parent groups 1510-3, 1510-4 of the third level 1504-3, is less than a total number of the groups 1510 of the third level 1504-3. To emphasize that the child group 1512-7 has two parent groups 1510-3, 1510-4, connections therebetween are drawn in FIG. 17 using broken lines, that are different from the solid lines of connections between other groups.

As such, if a new NN were generated from a selection of groups of the NN 1502 (e.g., similar to as depicted in FIG. 14), and such a new NN were to include the group 1512-7 of the fourth level 1504-4, then such a new NN would also have to include both parent groups 1510-3, 1510-4 of the third level 1504-3, even if such a new NN did not otherwise include other groups 1512-5, 1512-8, 1512-9 of the fourth level 1504-4 connected to the parent groups 1510-3, 1510-4 of the third level 1504-3.

Furthermore, the NNs 502, 1502 both illustrate that groups of the intermediate levels and a last level generally form a tree structure.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, train a neural network, among other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (300) comprising:
generating (302), via at least one computing device (200), a neural network (NN) (502) comprising an architecture of a plurality of levels of respective groups of respective neurons, a last level of the NN (502) split into groups corresponding to a respective number of a given set of NN classes, at least one child group of a given level of the NN (502) being disconnected from other groups of the given level;
associating (304), via the at least one computing device (200), the groups of the last level with a respective subset of the given set of NN classes; and
training (306), via the at least one computing device (200), the NN (502) using a training dataset (400), the training dataset (400) comprising inputs and outputs corresponding to the given set of the NN classes.

2. The method (300) of claim 1, wherein, when a total number of the respective groups of the given level is greater than two, then at least one child group of the given level has a number of parent groups from a previous adjacent level that is less than a total number of the respective groups of the previous adjacent level, such that at least one child group is disconnected from at least one group of the previous adjacent level.

3. The method (300) of any one of claim 1 to claim 2, further comprising:
dividing intermediate levels of the NN (502), between a first level and the last level of the NN (502), into respective groups, at least two of the respective groups of a given intermediate level being disconnected from each other within the given intermediate level, and disconnected from at least one previous group of a previous adjacent level.

4. The method (300) of claim 3, wherein every group in an intermediate level is connected to only one group in the previous adjacent level and connected to one or more of the respective groups in a next adjacent level.

5. The method (300) of claim 3, wherein the respective groups of the intermediate levels and the respective groups of the last level form a tree structure.

6. The method (300) of any one of claim 1 to claim 5, further comprising:
determining the given set of NN classes from semantic relationships between components of the training dataset (400).

7. The method (300) of any one of claim 1 to claim 6, further comprising:
generating an overall architecture of the NN (502), in terms of the plurality of the levels, the respective groups, and connections between the respective groups, based on semantic relationships between the NN classes.

8. The method (300) of any one of claim 1 to claim 7, further comprising, after the training:
for a given subset of the NN classes, selecting a portion of given groups from a first level of the NN (502) to the last level of the NN (502) that correspond to the given subset of the NN classes, and the given groups of the portion including intermediate groups that connect one or more of the groups of the last level of the NN (502) that correspond to the given subset of the NN classes to the first level, and excluding other groups; and
generating a new NN comprising the portion.

9. The method (300) of any one of claim 1 to claim 8, wherein the respective neurons of all groups of the given level of the NN (502) are disconnected from respective neurons of the other groups of the given level of the NN (502).

10. The method (300) of any one of claim 1 to claim 9, wherein the training dataset (400) comprises images, and the NN classes comprise descriptions of the images.

11. The method (300) of claim 1, wherein the training dataset (400) comprises words, and the NN classes represent one or more of: tasks; topic classification; sentiment analysis; and entity recognition.

12. A computing device (200) comprising:
at least one controller (202); and
a computer-readable storage medium (204) having stored thereon program instructions that, when executed by the at least one controller, causes the at least one controller to perform a set of operations comprising the method (300) of any one of claims 1 to 11.

13. A computer-readable storage medium (204) having stored thereon program instructions that, when executed by at least one computing device (200), causes the at least one computing device (200) to perform a set of operations comprising the method (300) of any one of claims 1 to 11.
